(19) Europäisches Patentamt / European Patent Office / Office européen des brevets

(11) **EP 4 626 044 A1**

(12) **EUROPÄISCHE PATENTANMELDUNG**

(43) Veröffentlichungstag:
01.10.2025 Patentblatt 2025/40

(21) Anmeldenummer: 25166811.7

(22) Anmeldetag: 27.03.2025

(51) Internationale Patentklassifikation (IPC):
*H04W 4/029* (2018.01)      *G06Q 10/04* (2023.01)

(52) Gemeinsame Patentklassifikation (CPC):
H04W 4/029; G06Q 10/04

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: 28.03.2024 DE 102024203002

(71) Anmelder: Urban INDEX Institut GmbH
69115 Heidelberg (DE)

(72) Erfinder:
• **Reinhart, Phillip**
  **10623 Berlin (DE)**
• **Christ, Wolfgang**
  **69115 Heidelberg (DE)**

(74) Vertreter: **Altmann Stößel Dick Patentanwälte PartG mbB**
**Theodor-Heuss-Anlage 2**
**68165 Mannheim (DE)**

(54) **COMPUTERIMPLEMENTIERTES VERFAHREN ZUM ERMITTELN VON RAUMTYPEN VON RAUMBEREICHEN EINES GEBAUTEN RAUMS**

(57) Es wird ein computerimplementiertes Verfahren zum Ermitteln von Raumtypen von Raumbereichen eines gebauten Raums vorgeschlagen, umfassend:
- Empfangen von Aktivitätsdaten, wobei die Aktivitätsdaten Informationen über Aufenthalts- und/oder Bewegungsprofile von mobilen Endgeräten umfassen, wobei die mobilen Endgeräte an Raumpunkten des gebauten Raums lokalisiert und/oder protokolliert worden sind;
- Ermitteln der Raumtypen für die Raumbereiche des gebauten Raums, vorzugsweise mittels einer Analyseeinheit, wobei auf Basis der Aktivitätsdaten ein oder mehrere Aktivitätsattribute für einen oder mehrere Raumpunkte in einem Raumbereich berechnet werden, wobei basierend auf den Aktivitätsattributen der Raumpunkte die physische Beschaffenheit des Raumbereichs ermittelt wird, so dass in Abhängigkeit der physischen Beschaffenheit der Raumtyp des Raumbereichs bestimmt wird.

EP 4 626 044 A1

**Beschreibung**

**Technisches Gebiet**

Die Erfindung betrifft ein Verfahren zum Ermitteln von Raumtypen von Raumbereichen eines gebauten Raums, wobei das Verfahren von einem Computersystem ausgeführt wird. Das erfindungsgemäße Verfahren kann zur quantifizierten und/oder qualifizierten Analyse von gebautem Raum eingesetzt werden, beispielsweise zur Unterstützung im Bereich Stadtplanung und Stadtentwicklung.

**Technischer Hintergrund**

Eine Stadtplanung strukturiert und organisiert den gebauten Raum und setzt sich mit der Erarbeitung und Realisierung von wünschenswerten, den menschlichen Bedürfnissen entsprechenden zukünftigen Zuständen einer Stadt und ihrer Teilbereiche auseinander. Dazu können räumliche Konzepte und raumwirksame Prozesse entwickelt werden, wobei insbesondere ökonomische, ökologische, soziale, gestalterische und technische Gesichtspunkte Berücksichtigung finden können.

Aus dem Stand der Technik sind unterschiedlichste Verfahren zur Analyse und Messung von Räumen und Arealen bekannt, die insbesondere im Kontext der Bau- und Stadtplanung Verwendung finden können. Die bekannten Verfahren und Techniken können beispielsweise dazu eingesetzt werden, den gebauten Raum zu erfassen, zu analysieren und wichtige Informationen für die Entwicklung, Bewertung, Gestaltung, und Verbesserung von städtischen Gebieten zu gewinnen.

So ist eine gründliche Bestandsaufnahme des bestehenden gebauten Raums ein notwendiger Ausgangspunkt für eine entsprechende Kartierung von Informationen über Grundstücke, Gebäude, Straßen, Grün- und Freiflächen, Infrastruktur, Verkehrsflüsse und andere städtische Merkmale.

Bislang ist die Einordnung und Funktionalität des gebauten Raums an Anforderungen gebunden, bei denen die individuelle Souveränität des menschlichen Individuums über die Zeit sehr gering war. Anforderungen wie zum Beispiel ein Achtstundentag, eine Fünftagewoche, feste Arbeits- und Verkaufszeiten, beispielsweise für Handel und Dienstleistungen, waren die Regel. Den unterschiedlichen Räumen bzw. Raumtypen des gebauten Raums waren jeweils spezifische Zeitbudgets zugewiesen. Wer sich wann, warum und wo befand, war das Produkt "raumfunktionaler Arbeitsteilung", die beispielsweise bis heute die Methoden und Instrumente der "Raumordnung" nach dem "Baugesetzbuch" (BauGB) bestimmt. Insbesondere der "Flächennutzungsplan" (FNP) zur administrativen Steuerung der Raumfunktion und Kontrolle des Raumgebrauchs. Die "Baunutzungsverordnung" (BauNVO), die Art und Maß der Nutzung parzellenscharf reguliert, beispielsweise für den Einzelhandel mit der Festsetzung von "zentralen Versorgungsbereichen" oder der detaillierten Auflistung von "zentrenrelevanten Sortimenten". Das "Zentrale-Orte-Modell" der Landesplanung klassifiziert Städte und Gemeinden nach Größe und funktionaler Ausstattung, beispielsweise in Ober-Mittel- und Unterzentren. Der Raumgebrauch ist im Zeitalter der "Raumfunktionalen Arbeitsteilung" planungsrechtlich vorprogrammiert und in der Praxis festgeschrieben. Die Interdependenz von Funktion, Gebrauch und gebauter Form ist das Kennzeichen des gebauten Raums im Industriezeitalter. Die zuvor genannten Instrumente sind unflexibel.

Im Informationszeitalter verändern sich die Bedürfnisse, die an den gebauten Raum und dessen Funktionalität gestellt werden, enorm. Die Digitalisierung sorgt für eine Deregulierung von Zeit und Gebrauch des gebauten Raums, so dass mit der Digitalisierung eine Umkehr der Nutzungsverhältnisse einhergeht. Menschen gewinnen individuelle Souveränität über Zeit und Raum, wodurch eine Transformation der bisherigen Zeit- und Raumkultur (des Industriezeitalters) erfolgt, bei der die individuelle Souveränität über die Zeit in Bezug auf eine funktionale Raumnutzung des gebauten Raums als gering galt.

Im Hinblick auf die Funktionalität und Nutzung von gebautem Raum erfolgt eine Abkehr von festen Zeitspannen hin zu dynamischen Zeitbudgets. Starre Bewegungsmuster verlieren an Bedeutung und es erfolgt eine Transformation hin zu flexiblen Gebrauchsformen der zur Verfügung stehenden Räume des gebauten Raums. Ferner erfolgt eine Transformation von regulierten Funktionsräumen hin zu frei programmierbaren Raumfunktionen. Dies ist begründet durch unterschiedlichste Einflussfaktoren wie beispielsweise das Homeoffice, Homeschooling, Filmstreaming oder Onlineshopping, so dass etwa eine temporäre Verwandlung von Wohnraum in Büro, Schule, Kino oder Warenhaus erfolgen kann. Hotels, Cafés oder Parks werden zu Coworking-Spaces. Telearbeit ist zum beruflichen Alltag geworden. So bedarf es neben dem individuellen Zeitbudget auch einer Berücksichtigung des individuellen Raumbudgets.

Damit wird im Zeitalter der Digitalisierung der funktionale Gebrauch des gebauten Raums zunehmend volatil und unbestimmt. Die bekannten technischen Verfahren zur Messung und Kartierung von Objekten, Flächen, Grundstücken und Gebäuden erfassen den gebauten Raum als geometrische Form in zwei- und/oder dreidimensional bestimmbarer Erscheinung, beispielsweise mittels Photogrammmetrie, Tachymetrie oder Laserscanning. Der alltägliche funktionale Gebrauch des gebauten Raums ist im Wesentlichen nicht mehr statisch, so dass die Funktionalität also nicht mehr grundsätzlich mit der gebauten Form zusammenhängt. Ein dynamischer Raumgebrauch kann mit den bekannten Methoden und Instrumenten aus dem Stand der Technik nicht erfasst werden.

Gleichwohl benötigt jede Art von Planung und Gestaltung, Steuerung und Verwaltung aus der Realnutzung abgeleitete Datengrundlagen zur Ermittlung des funktionalen Gebrauchs von Raumbereichen eines gebauten Raums, sowie praxisgerechte Verfahren zu deren Berechnung und Auswertung. Betroffen sind beispielsweise Bauwesen und Städtebau, Stadt- und Regionalplanung, Planungs- und Baurecht, Finanz- und Immobilienwirtschaft, Handel und Dienstleistungen, technische und soziale Infrastruktur. Raumrelevanten Verfahren, insbesondere unter den Aspekten Effizienz, Nachhaltigkeit, Ressourcenschonung, beispielsweise zur Bestimmung des "ökologischen Fußabdrucks", zur Entwicklung eines "Kommunalen Energiemanagements" (KEM) oder "Kommunalen Mobilitätsmanagements", wäre hingegen eine Nutzung von Echtzeitdaten des individuellen Raumgebrauchs besonders vorteilhaft.

Im Hinblick auf die Funktionalität und Nutzung von gebautem Raum erfolgt eine Abkehr von festen zu dynamischen Zeitbudgets. Zum Beispiel: Je mehr Mobilität in der Wahl der Ziele, Zeiten und Verkehrsmittel persönlichen Entscheidungen und Zeitbudgets folgt, desto weniger können lineare, massenverkehrstypisch getaktete Angebote, den Bedarf decken. Umso dysfunktionaler und ineffizienter droht die entsprechende technische Infrastruktur, etwa der schienengebundene, auf die traditionellen Zentren und Verkehrszeiten ausgerichtete öffentliche Personenverkehr zu werden.

Je mehr der Zugang zu Informationen, Waren und Dienstleistungen, insbesondere durch die Anbindung an das Internet, zu jeder Zeit, überall und potentiell allen möglich ist, desto weniger können funktionsräumliche Bindungen, etwa durch Widmung des gebauten Raums als "allgemeines Wohngebiet" oder "Kerngebiet" (BNVO/§7), die zeitliche Begrenzung des Zugangs und die hierarchischen Ordnungssysteme - "Zentrale Orte" den funktionalen Gebrauch des gebauten Raums bestimmen.

Zum Beispiel das Online-Shopping, das keinerlei (sichtbare) Raumkomponenten mehr besitzt, zeitliche Beschränkungen oder Ausnahmen davon ("Verkaufsoffener Sonntag"), nicht mehr kennt, sowie ein grenzenloses Angebotssortiment nutzt und den "Point of Sale" (POS) in den virtuellen Raum verschiebt. Wenn die sogenannte "Customer Journey" nicht mehr im physischen Raum stattfindet, sind die entsprechenden Analysetools wie der "Zentralitätsindex" und Planungsinstrumente wie die Verkaufsflächen- und Sortimentsbegrenzung, nicht mehr systemrelevant für den gebauten Raum.

Wer sich im gebauten Raum wann, warum und wo befindet, ist in der digitalisierten Lebenswelt und individualisierten Gesellschaft potentiell selbstbestimmt. Folglich bedarf es eines Instruments, das den neuen Anforderungen und Bedürfnissen zur quantifizierten und/oder qualifizierten Analyse von gebautem Raum im Zeitalter des digitalen Wandels gerecht wird, insbesondere zur Unterstützung im Kontext einer effizienten Bau- und Stadtplanung und/oder Stadtentwicklung.

**Aufgabe der Erfindung**

Es wäre daher wünschenswert, ein Verfahren zum Ermitteln eines funktionalen Gebrauchs bzw. von Raumtypen von Raumbereichen eines gebauten Raums bereitzustellen, welches die Nachteile bekannter Verfahren zumindest weitgehend vermeidet. Insbesondere soll eine möglichst effiziente Erfassung und Ermittlung der Raumtypen der Raumbereiche des gebauten Raums ermöglicht werden.

**Allgemeine Beschreibung der Erfindung**

Diese Aufgabe wird gelöst durch ein computerimplementiertes Verfahren zum Ermitteln von Raumtypen von Raumbereichen eines gebauten Raums mit den Merkmalen der unabhängigen Patentansprüche. Vorteilhafte Weiterbildungen, welche einzeln oder in beliebiger Kombination realisierbar sind, sind in den abhängigen Ansprüchen dargestellt.

Im Folgenden werden die Begriffe "haben", "aufweisen", "umfassen" oder "einschließen" oder beliebige grammatikalische Abweichungen davon in nicht-ausschließlicher Weise verwendet. Dementsprechend können sich diese Begriffe sowohl auf Situationen beziehen, in welchen, neben den durch diese Begriffe eingeführten Merkmalen, keine weiteren Merkmale vorhanden sind, oder auf Situationen, in welchen ein oder mehrere weitere Merkmale vorhanden sind. Beispielsweise kann sich der Ausdruck "A hat B", "A weist B auf", "A umfasst B" oder "A schließt B ein" sowohl auf die Situation beziehen, in welcher, abgesehen von B, kein weiteres Element in A vorhanden ist (d.h. auf eine Situation, in welcher A ausschließlich aus B besteht), als auch auf die Situation, in welcher, zusätzlich zu B, ein oder mehrere weitere Elemente in A vorhanden sind, beispielsweise Element C, Elemente C und D oder sogar weitere Elemente.

Weiterhin wird darauf hingewiesen, dass die Begriffe "mindestens ein" und "ein oder mehrere" sowie grammatikalische Abwandlungen dieser Begriffe, wenn diese in Zusammenhang mit einem oder mehreren Elementen oder Merkmalen verwendet werden und ausdrücken sollen, dass das Element oder Merkmal einfach oder mehrfach vorgesehen sein kann, in der Regel lediglich einmalig verwendet werden, beispielsweise bei der erstmaligen Einführung des Merkmals oder Elementes. Bei einer nachfolgenden erneuten Erwähnung des Merkmals oder Elementes wird der entsprechende Begriff "mindestens ein" oder "ein oder mehrere" in der Regel nicht mehr verwendet, ohne Einschränkung der Möglichkeit, dass das Merkmal oder Element einfach oder mehrfach vorgesehen sein kann.

Weiterhin werden im Folgenden die Begriffe "vorzugsweise", "insbesondere", "beispielsweise" oder ähnliche Begriffe in Verbindung mit optionalen Merkmalen verwendet, ohne dass alternative Ausführungsformen hierdurch beschränkt werden. So sind Merkmale, welche durch diese Begriffe eingeleitet werden, optionale Merkmale, und es ist nicht beabsichtigt, durch diese Merkmale den Schutzumfang der Ansprüche und insbesondere der unabhängigen Ansprüche einzuschränken. So kann die Erfindung, wie der Fachmann erkennen wird, auch unter Verwendung anderer Ausgestaltungen durchgeführt werden. In ähnlicher Weise werden Merkmale, welche durch "in einer Ausführungsform der Erfindung" oder durch "in einem Ausführungsbeispiel der Erfindung" eingeleitet werden, als optionale Merkmale verstanden, ohne dass hierdurch alternative Ausgestaltungen oder der Schutzumfang der unabhängigen Ansprüche eingeschränkt werden soll. Weiterhin sollen durch diese einleitenden Ausdrücke sämtliche Möglichkeiten, die hierdurch eingeleiteten Merkmale mit anderen Merkmalen zu kombinieren, seien es optionale oder nicht-optionale Merkmale, unangetastet bleiben.

In einem ersten Aspekt der vorliegenden Erfindung wird ein computerimplementiertes Verfahren zum Ermitteln von Raumtypen von Raumbereichen eines gebauten Raums vorgeschlagen. Das Verfahren umfasst die folgenden Schritte:

- Empfangen von Aktivitätsdaten, wobei die Aktivitätsdaten Informationen über Aufenthalts- und/oder Bewegungsprofile von mobilen Endgeräten umfassen, wobei die mobilen Endgeräte an Raumpunkten des gebauten Raums lokalisiert und/oder protokolliert worden sind;
- Ermitteln der Raumtypen für die Raumbereiche des gebauten Raums, vorzugsweise mittels einer Analyseeinheit, wobei auf Basis der Aktivitätsdaten ein oder mehrere Aktivitätsattribute für einen oder mehrere Raumpunkte in einem Raumbereich berechnet werden, wobei basierend auf den Aktivitätsattributen der Raumpunkte eine physische Beschaffenheit des Raumbereichs ermittelt wird, so dass in Abhängigkeit der physischen Beschaffenheit der Raumtyp des Raumbereichs bestimmt wird.

In erfindungsgemäßer Weise ist zunächst einmal erkannt worden, dass es im Hinblick auf die aktuellen Anforderungen und Bedürfnisse zur quantifizierten und/oder qualifizierten Analyse von gebautem Raum von erheblichem Vorteil ist, wenn eine Analyse des gebauten Raums nicht mehr statisch anhand von festgelegten Funktionalitäten und Widmungen des Raumes erfolgt, sondern vielmehr in dynamischer Hinsicht anhand einer tatsächlichen Nutzung der menschlichen Individuen bzw. der Personen. In weiter erfindungsgemäßer Weise ist erkannt worden, dass die dynamische Nutzung des gebauten Raums und eine möglichst effiziente Erfassung von vorgegebenen Raumtypen mit Hilfe von Bewegungsprofilen der Personen mit mobilen Endgeräten erfasst werden kann, wobei die mobilen Endgeräte mit drahtlosen Telekommunikationsnetzen verbunden sein können. Ferner ist erkannt worden, dass auf Basis einer physischen Beschaffenheit des Raumbereichs ein Raumtyp für den Raumbereich bestimmt werden kann. Dazu werden erfindungsgemäß Aktivitätsdaten empfangen, die Informationen über Aufenthalts- und/oder Bewegungsprofile von mobilen Endgeräten der Personen in dem gebauten Raum umfassen. Die mobilen Endgeräte der Personen sind an Raumpunkten des gebauten Raums lokalisiert bzw. protokolliert worden. Schließlich erfolgt ein Ermitteln der Raumtypen der Raumbereiche des gebauten Raums, vorzugsweise mittels einer Analyseeinheit, wobei auf Basis der Aktivitätsdaten ein oder mehrere Aktivitätsattribute für einen oder mehrere Raumpunkte in einem Raumbereich bzw. innerhalb eines die Raumpunkte umgebenden Raumbereichs ermittelt werden. Basierend auf den Aktivitätsattributen der Raumpunkte kann die physische Beschaffenheit des gebauten Raums in den Raumpunkten und damit auch des die Raumpunkte umgebenden Raumbereichs ermittelt werden, so dass in Abhängigkeit der physischen Beschaffenheit dem Raumbereich ein Raumtyp zugeordnet werden kann bzw. der Raumtyp des Raumbereichs bestimmt werden kann.

Somit ist ein Verfahren zum Ermitteln von Raumtypen von Raumbereichen eines gebauten Raums angegeben, welches eine effiziente Erfassung und/oder Ermittlung von, ggf. vorgegebenen, Raumtypen in automatisierter Form ermöglicht. Insbesondere kann, aus der Realnutzung abgeleitet, eine Bestimmung der Raumtypen der Raumbereiche ermöglicht werden.

In vorteilhafter Weise ist also denkbar, dass basierend auf den berechneten Aktivitätsattributen der Raumpunkte eine physische Beschaffenheit der Raumbereiche ermittelt und/oder berechnet werden kann, so dass in Abhängigkeit der - anhand den Aktivitätsattributen ermittelten bzw. berechneten - physischen Beschaffenheit eines Raumbereichs der Raumtyp des Raumbereichs bestimmt werden kann.

Die damit erzielbaren Ergebnisse lassen sich zum Beispiel besonders vorteilhaft für technische Anwendungen im Bereich des "Building Information Modelling" (BIM) und/oder "City Information Modelling" (CIM) verwenden, die dann beispielsweise dort beim Aufbau eines "Digitalen Zwillings" der physischen und funktionalen Substanz von Gebäuden und Stadtraum (3D-CAD) unterstützend und ergänzend integriert werden können.

In vorteilhafter Weise ist denkbar, dass mit einem Verfahren gemäß einer Ausführungsform der Erfindung ein Verfahren bereitgestellt werden kann, welches einen potentiell selbstbestimmten Gebrauch von Raumbereichen des gebauten Raums erfasst und in automatisierter Form die Raumtypen der Raumbereiche des gebauten Raums ermitteln kann.

Das Verfahren zum Ermitteln von Raumtypen von Raumbereichen eines gebauten Raums kann von einem Computersystem ausgeführt werden und somit computerimplementiert ausgebildet sein.

Der Begriff "computerimplementiert", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen Prozess, welcher vollständig oder teilweise unter Verwendung von Datenverarbeitungsmitteln implementiert ist, insbesondere unter Verwendung mindestens eines Prozessors.

Die Begriffe "Computer" und "Computersystem" können sich hier grundsätzlich auf eine Vorrichtung oder eine Kombination oder Netzwerk von Vorrichtungen beziehen, welche mindestens eine Datenverarbeitungseinheit, wie einen Prozessor aufweist. Der Computer bzw. das Computersystem kann, zusätzlich eine oder mehrere weitere Komponenten aufweisen, wie beispielsweise mindestens ein Datenspeichergerät, mindestens eine elektronische Schnittstelle oder mindestens eine Mensch-Maschine Schnittstelle.

Der Begriff "gebauter Raum", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen physischen Raum beziehen. Der gebaute Raum kann durch menschliche Aktivitäten und Baumaßnahmen gestaltet, geschaffen und modifiziert sein. Es kann unter dem gebauten Raum insbesondere der Raum verstanden werden, den Menschen in der gebauten Umwelt um sich herum wahrnehmen und nutzen. Der gebaute Raum als fester Körper kann den Raum in konkreter gegenständlicher Weise definieren, wie er sich dem menschlichen Benutzer bzw. der Person repräsentiert. Gebauter Raum kann Städte, Dörfer, Gebäude, Straßen, Parks, Plätze und/oder andere künstlich geschaffene Strukturen umfassen.

Der Begriff "Raumtyp", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine bestimmte Art eines Raumbereichs des gebauten Raums beziehen, wobei der Raumbereich aufgrund seiner Beschaffenheit einem spezifischen bzw. vorgegebenen Raumtyp zuordenbar sein kann. Der Raumtyp eines Raumbereichs kann beispielsweise einen funktionalen Gebrauch des Raumbereichs beschreiben.

Der Begriff "Raumbereich", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen zusammenhängenden räumlichen Bereich und/oder einen räumlichen Teilbereich eines, ggf. betrachteten, gebauten Raums beziehen. Ein Raumbereich könnte auch einem Raumpunkt des gebauten Raums entsprechen bzw. einen Raumpunkt umfassen.

Der Begriff "Raumpunkt", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen Standort und/oder auf einen Standortbereich des gebauten Raums beziehen. Beispielsweise kann ein Raumpunkt durch eine Ortskoordinate repräsentiert werden. Ein Raumpunkt bzw. ein Standort kann sich auf eine geografische Position eines Objekts, vorzugsweise einer Person bzw. eines - ggf. von der Person mit sich geführtes - mobiles Endgerät auf der Erdoberfläche beziehen. Es kann eine Koordinate sein, die angibt, wo sich die Person bzw. deren mobiles Endgerät im gebauten Raum befindet. Raumpunkte bzw. Standorte können in verschiedenen Formaten angegeben werden, um ihre genaue Position zu beschreiben. Lediglich beispielhaft seien folgende Möglichkeiten genannt, um einen Standort anzugeben:

- Breitengrad und Längengrad: Dies ist das geografische Koordinatensystem, das auf der Breite (Norden oder Süden) und der Länge (Osten oder Westen) basiert. Breitengrad kann üblicherweise in Grad, Minuten und Sekunden oder in Dezimalgrad ausgedrückt werden, während Längengrad ebenfalls in Grad, Minuten und Sekunden oder in Dezimalgrad angegeben werden kann.
- Geodaten: Für präzise Positionsangaben können auch Geodaten im Format von GeoJSON, KML (Keyhole Markup Language) oder GPX (GPS Exchange Format) verwendet werden, um genaue Standorte mit geografischen Informationen darzustellen.
- Globale Ortsbestimmungssysteme (GNSS): Dies umfasst Systeme wie beispielsweise GPS (Global Positioning System), GLONASS, Galileo und Beidou, die genaue Positionsbestimmung mit Hilfe von Satellitensignalen ermöglichen.

Der Begriff "physische Beschaffenheit", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine physische Beschaffenheit eines Raumbereichs beziehen. Die physische Beschaffenheit eines Raumbereichs kann dabei eine Eigenschaft, insbesondere eine Beschaffenheitseigenschaft, angeben, die den Raumbereich charakterisiert.

Der Begriff "Aktivitätsdaten", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf Informationen über Aufenthalts- und/oder Bewegungsprofile von Personen bzw. deren mobilen Endgeräte beziehen. Die Informationen über die Personen können anhand von Standortdaten der mobilen Endgeräte, die die Personen bei sich tragen, vorzugsweise über einen vorgegebenen Zeitverlauf hinweg, erfasst werden. Die Aktivitätsdaten können beispielsweise als Standort-Datensätze für ein mobiles Endgerät gesammelt und bereitgestellt werden.

Der Begriff "Aufenthalts- und/oder Bewegungsprofil", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine oder mehrere Eigenschaften beziehen, die einen Aufenthalt und/oder eine Bewegung einer Person bzw. dessen mobilen Endgeräts, vorzugsweise über einen vorgegebenen Zeitverlauf hinweg, charakterisieren.

Ein Aufenthaltsprofil bzw. ein Bewegungsprofil kann eine Aufzeichnung oder Darstellung der Bewegungen einer Person oder eines Objekts über einen bestimmten Zeitraum hinweg umfassen. Das Aufenthalts- und/oder Bewegungsprofil kann Informationen über die räumlichen Aktivitäten, Routen, Geschwindigkeiten und/oder möglicherweise andere relevante Daten repräsentieren. Im Konkreten kann im Rahmen des Geo-Trackings und der Erfassung des Standortverlaufs Folgendes umfasst sein: In einer vernetzten Welt, in der viele Personen mobile Endgeräte, wie beispielsweise Smartphones oder GPS-Geräte, verwenden, kann auf, ggf. vorhandene, Dienste zurückgegriffen werden, die Standorte von Nutzern verfolgen, um Aufenthalts- bzw. Bewegungsprofile zu erstellen. In vorteilhafter Weise können für die Aktivitätsdaten anonyme bzw. anonymisierte Aufenthalts- und/oder Bewegungsprofile genutzt werden, wie sie von typischen mobilen Endgeräten aufgezeichnet werden.

Der Begriff "mobiles Endgerät", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein mobiles elektronisches Gerät beziehen, genauer gesagt zum Beispiel auf ein mobiles Kommunikationsgerät wie ein Mobiltelefon oder ein Smartphone. Zusätzlich oder alternativ kann sich das mobile Endgerät auch auf einen Tablet-Computer oder einen anderen Typ eines tragbaren Computers beziehen. Das mobile Endgerät ist vorzugsweise leicht tragbar und kann drahtlos mit einem oder mehreren Netzwerken kommunizieren. Zum Beispiel kann das mobile Endgerät auch eine Smartwatch sein. Die Kommunikation zwischen dem mobilen Endgerät und einem Netzwerk kann dabei erfolgen, um Daten, Informationen und/oder Dienste zu empfangen oder zu senden. Das mobile Endgerät kann handlich und/oder batteriebetrieben ausgebildet sein. Des Weiteren kann das mobile Endgerät der Person ermöglichen, von unterschiedlichen Orten bzw. Standpunkten aus auf eine Vielzahl von Funktionen zuzugreifen. In vorteilhafter Weise kann das mobile Endgerät eine GPS-Funktionalität und/oder eine andere Technik zur Ermittlung und/oder Aufzeichnung seines Standorts und vorzugsweise seiner Bewegung umfassen.

Der Begriff "Analyseeinheit", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine computerimplementierte Analyseeinheit beziehen. Die computerimplementierte Analyseeinheit kann sich dabei auf eine Computer-Einrichtung und/oder auf eine softwareimplementierte Funktionseinheit beziehen, die in der Lage ist, eine oder mehrere Operationen mit den zu verarbeitenden Daten durchzuführen. Insbesondere kann die Analyseeinheit als Computer-Einrichtung mindestens einen Prozessor umfassen oder als softwareimplementierte Funktionseinheit mindestens einen Prozessor verwenden, der durch geeignete Software zur Durchführung einer oder mehrerer Operationen mit den zu verarbeitenden Daten programmiert werden kann. Die Analyseeinheit kann mindestens ein Cloud-Server sein oder einen solchen umfassen oder eine Teilfunktionalität eines solchen sein. Darüber hinaus kann die Analyseeinheit so konfiguriert sein, dass sie Daten speichert, beispielsweise eine Datenbank, insbesondere mindestens einen Datenbankeintrag.

Der Begriff "Aktivitätsattribut", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine charakteristische Eigenschaft einer Person in Bezug auf deren Gebrauch des gebauten Raums beziehen. Im Konkreten kann ein Aktivitätsattribut die Art und Weise leiblicher Anwesenheit einer Person im gebauten Raum, beispielsweise an einem Raumpunkt bzw. in einem Raumbereich im gebauten Raum, charakterisieren. Aktivitätsattribute können sich auf eine Bewegungsinformation, auf eine Routineinformation, auf eine Dichteinformation und/oder auf eine Niveauinformation beziehen, wobei diese Informationen den Gebrauch des gebauten Raums durch Personen beschreiben. Diese Informationen können anhand von Daten - vorzugsweise Aufenthalts- und/oder Bewegungsprofildaten - der mobilen Endgeräte, die von den Personen mitgeführt werden, ermittelt werden.

In vorteilhafter Weise kann die physische Beschaffenheit der Raumbereiche eine erste Beschaffenheitseigenschaft umfassen, wobei die erste Beschaffenheitseigenschaft einen Raumbereich als INNEN oder als AUSSEN charakterisiert. INNEN kann also den Raumbereich bezeichnen, der sich innerhalb eines vorgegebenen und/oder vorgebbaren Bezugsraums befindet. AUSSEN kann den Raumbereich bezeichnen, der sich außerhalb eines vorgegebenen und/oder vorgebbaren Bezugsraumes befindet. Somit kann eine Beschaffenheitseigenschaft für einen Raumbereich festgelegt bzw. einem Raumbereich zugeordnet werden, wonach eine elementare Beschaffenheit des Raumes, nämlich die Dichotomie von INNEN und AUSSEN, berücksichtigt wird. Ein Raumbereich des gebauten Raums, der die Beschaffenheitseigenschaft INNEN aufweist ist beispielsweise ein Haus oder eine Halle. Ein Raumbereich des gebauten Raums, der die Beschaffenheitseigenschaft AUSSEN aufweist ist beispielsweise eine Straße oder eine Grünanlage.

In weiter vorteilhafter Weise kann die physische Beschaffenheit der Raumbereiche eine zweite Beschaffenheitseigenschaft umfassen, wobei die zweite Beschaffenheitseigenschaft einen Raumbereich als UMSCHLOSSEN oder als OFFEN charakterisiert. Somit kann eine Beschaffenheitseigenschaft für einen Raumbereich festgelegt bzw. einem Raumbereich zugeordnet werden, wonach eine elementare Beschaffenheit des Raumes, nämlich die Dichotomie von UMSCHLOSSEN und OFFEN, berücksichtigt wird. Ein Raumbereich des gebauten Raums, der die Beschaffenheitseigenschaft UMSCHLOSSEN aufweist ist beispielsweise eine Wohnung oder ein Spielplatz. Ein Raumbereich des gebauten Raums, der die Beschaffenheitseigenschaft OFFEN aufweist ist beispielsweise ein Platz oder eine Wiese.

Der Begriff "INNEN", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen Raumbereich als Innenraum beziehen. Ein Innenraum kann vorzugsweise ein allseits von Wänden bzw. Decken umgebener Raum, ein im Inneren von etwas liegender Raum, und/oder ein das Innere von etwas bildender Raum umfassen.

Der Begriff "AUSSEN", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen Raumbereich als Außenraum beziehen. Ein Außenraum kann vorzugsweise ein Raum umfassen, der sich außerhalb von etwas Geschlossenem befindet, also ein Raum der nicht allseits von Wänden bzw. Decken umgeben ist.

Der Begriff "UMSCHLOSSEN", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen Raumbereich beziehen, der eingeschränkt zugänglich ist. Zum Beispiel kann sich der Begriff auf einen Raumbereich bzw. auf ein Raumgebilde beziehen, der bzw. das (zumindest auch) zum Betreten durch Menschen bestimmt und mit Vorrichtungen versehen ist, die das Eindringen von Unbefugten abwehren sollen. Im Gegensatz zum Gebäude muss der umschlossene Raum keine abgeschlossene Decke besitzen. Daher können auch umzäunte Bereiche unter den Begriff fallen. Dabei können aber die folgenden zwei Voraussetzungen gelten: Die Umzäunung muss nach dem Willen des Berechtigten dazu dienen, andere am Betreten des abgegrenzten Raumes zu hindern (und nicht etwa nur der schöneren Optik). Zudem muss der Zaun tatsächlich ein Hindernis bilden, das das Eindringen Unbefugter nicht unerheblich erschwert.

Der Begriff "OFFEN", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen Raumbereich beziehen, der frei zugänglich ist.

In vorteilhafter Weise können einer oder mehrere der folgenden Raumtypen vorgesehen sein:

- ein erster Raumtyp für Raumbereiche, die INNEN und UMSCHLOSSEN ausgebildet sind;
- ein zweiter Raumtyp für Raumbereiche, die INNEN und OFFEN ausgebildet sind;
- ein dritter Raumtyp für Raumbereiche, die AUSSEN und UMSCHLOSSEN ausgebildet sind.
- ein vierter Raumtyp für Raumbereiche, die AUSSEN und OFFEN ausgebildet sind;

Somit kann ein Raummodell bereitgestellt werden, welches das Verhältnis zwischen Mensch und Raum mittels vier möglichen elementaren Konstellationen abbilden kann. Der erste Raumtyp beschreibt Raumbereiche, die INNEN und UMSCHLOSSEN ausgebildet sind. Beim ersten Raumtyp befinden sich Menschen in einem Innenraum mit eingeschränktem Zugang. Zum Beispiel: Wohnung, Büro, Praxis, Werkstatt etc.

Der zweite Raumtyp beschreibt Raumbereiche, die INNEN und OFFEN ausgebildet sind. Beim zweiten Raumtyp befinden sich Menschen in einem Innenraum mit freiem Zugang. Zum Beispiel: Kirche, Bahnhof, Café, Center, Theater etc.

Der dritte Raumtyp beschreibt Raumbereiche, die AUSSEN und UMSCHLOSSEN ausgebildet sind. Beim dritten Raumtyp befinden sich Menschen in einem Außenraum mit eingeschränktem Zugang. Zum Beispiel: Stadion, Freibad, Friedhof, Schlosspark, Zoo etc.

Der vierte Raumtyp beschreibt Raumbereiche, die AUSSEN und OFFEN ausgebildet sind. Beim vierten Raumtyp befinden sich Menschen demnach in einem Außenraum mit freiem Zugang. Zum Beispiel: Straße, Platz, Parkanlage, etc.

In einer vorteilhaften Ausgestaltung kann das Verfahren ferner umfassen, dass ein Raummodell für den gebauten Raum bereitgestellt wird, wobei das Raummodell mehrere Raumtypen umfasst, und wobei einem Raumbereich des gebauten Raums auf Basis einer physischen Beschaffenheit des Raumbereichs ein Raumtyp des Raummodells zuordenbar ist.

Der Begriff "Raummodell", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Darstellungsform zur Beschreibung, Einordnung und/oder Ermittlung von gebautem Raum beziehen. Das Raummodell kann mehrere "Raumtypen" umfassen, so dass anhand der unterschiedlichen Raumtypen der gebaute Raum je nach Beschaffenheit beschreibbar und klassifizierbar ist.

In vorteilhafter Weise kann die erste Beschaffenheitseigenschaft und die zweite Beschaffenheitseigenschaft derart miteinander kombiniert werden, dass das Raummodell einen oder mehrere der folgenden Raumtypen umfasst:

- einen ersten Raumtyp für Raumbereiche, die INNEN und UMSCHLOSSEN ausgebildet sind;
- einen zweiten Raumtyp für Raumbereiche, die INNEN und OFFEN ausgebildet sind;
- einen dritten Raumtyp für Raumbereiche, die AUSSEN und UMSCHLOSSEN ausgebildet sind;
- einen vierten Raumtyp für Raumbereiche, die AUSSEN und OFFEN ausgebildet sind.

In vorteilhafter Weise können die Aktivitätsdaten eines mobilen Endgeräts Standort-Datensätze umfassen. Die Standort-Datensätze können dabei einen Zeitstempel und eine Information über den Standort des mobilen Endgeräts zum Zeitpunkt des Zeitstempels umfassen. Den Standort-Datensätzen kann eine Kennung des entsprechenden mobilen Endgeräts zugeordnet sein. Somit können auf raffinierte Weise Aktivitätsdaten betreffend die Bewegung von Personen zu räumlich relevanten Daten für den gebauten Raum transformiert werden, nämlich aufgrund der von den Personen mitgeführten mobilen Endgeräte. In vorteilhafter Weise kann die Gewinnung und Abbildung raumbedeutsamer Information im Hinblick auf den gebauten Raum aus einer technisch notwendigen, vorzugsweise permanent auftretenden, Kommunikation zwischen dem virtuellen Raum im Internet und den - in dem gebauten Raum lokalisierten - mobilen Endgeräten abgeleitet werden. Dabei können die mit dem Internet verbundenen mobilen Endgeräte die aufgezeichneten Aktivitätsdaten an eine zentrale Servereinrichtung senden. Dies kann auch indirekt über diverse zwischengeschaltete Stationen und Systeme erfolgen.

In vorteilhafter Weise werden Aktivitätsdaten von mobilen Endgeräten gesammelt, die in dem gebauten Raum lokalisiert bzw. protokolliert worden sind. Zum Beispiel können folgende grundlegende Informationen als Aktivitätsdaten an eine zentrale Servereinrichtung gesendet bzw. von dieser zusammengetragen werden:

- Eine Gerätekennung bzw. eine Kennung, die die mobilen Endgeräte identifiziert und damit Daten empirisch qualifiziert.
- Einen Zeitstempel, der die Bewegung der Person des mobilen Endgerätes identifiziert. Damit kann auch eine Geschwindigkeit des sich ggf. bewegenden mobilen Endgeräts bzw. seines Trägers protokolliert werden.
- Eine Standortkoordinate, die die Orte identifiziert, an denen sich das mobile Endgerät bzw. sein Träger/Benutzer befindet. Damit lassen sich Strecken und Abstände zwischen Raumpunkten bestimmen und/oder dimensionieren.

Schließlich kann von einem Computersystem, wie beispielsweise einer zentralen Servereinrichtung, eine Vielzahl von Standort-Datensätzen von mobilen Endgeräten, die in dem gebauten Raum lokalisiert bzw. protokolliert worden sind, als Aktivitätsdaten der mobilen Endgeräte bereitgestellt werden.

Der Begriff "Servereinrichtung", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Einrichtung beziehen, die in der Lage ist, eine oder mehrere Operationen mit den zu verarbeitenden Daten durchzuführen. Insbesondere kann die Servereinrichtung mindestens einen Prozessor umfassen, der durch geeignete Software zur Durchführung einer oder mehrerer Operationen mit den zu verarbeitenden Daten programmiert werden kann. Die Servereinrichtung kann mindestens ein Cloud-Server sein oder einen solchen umfassen. Darüber hinaus kann die Servervorrichtung so konfiguriert sein, dass sie Daten speichert, beispielsweise eine Datenbank, insbesondere mindestens einen Datenbankeintrag.

Der Begriff "Datenbank", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine organisierte Sammlung von Daten beziehen, die im Allgemeinen elektronisch auf einem Computer oder einem Computersystem gespeichert und zugänglich sind. Die Datenbank kann eine Datenspeichervorrichtung umfassen oder von ihr gebildet werden. Die Datenbank kann mindestens ein Datenbankverwaltungssystem umfassen, das eine auf einem Computer oder Computersystem laufende Software enthält, wobei die Software die Interaktion mit einem oder mehreren Benutzern, einer Anwendung oder der Datenbank selbst ermöglicht, zum Beispiel um die in der Datenbank enthaltenen Daten zu erfassen und zu analysieren. Das Datenbankmanagementsystem kann ferner Einrichtungen zur Verwaltung der Datenbank umfassen. Die Datenbank, die die Daten enthält, kann also aus einem Datenbanksystem bestehen, das neben den Daten auch eine oder mehrere zugehörige Anwendungen umfasst.

In weiter vorteilhafter Weise kann jeder Standort-Datensatz ferner eine Information über die Höhenlage des mobilen Endgeräts zum Zeitpunkt des Zeitstempels umfassen. Der Begriff "Höhenlage", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich - vorzugsweise geodätisch - auf den lotrechten Abstand von einer Referenzfläche beziehen. Zum Beispiel kann eine Information über die Höhenlage des mobilen Endgeräts eine Information über den Abstand des mobilen Endgeräts vom Boden umfassen, insbesondere vom Boden des gebauten Raums bzw. eines Raumbereichs, vorzugsweise an einem Raumpunkt. Die Information über die Höhenlage kann ferner eine absolute Höhe oder eine relative Höhe umfassen. Zum Beispiel kann die die absolute Höhe die "Höhe über Null" sein: Höhe über dem Meeresspiegel in Bezug zu einem als Nullpunkt festgelegten Vermessungszeichen. Des Weiteren kann die relative Höhe die Höhe über Grund sein, die körperliche Höhe, um die das lokalisierte mobile Endgerät seine Umgebung überragt.

In vorteilhafter Weise können die Standort-Datensätze der Aktivitätsdaten des mobilen Endgeräts in zeitlicher Abfolge geordnet sein. Somit lässt sich ein Aufenthalts- und/oder Bewegungsprofil eines Benutzers, der das mobile Endgeräte mit sich trägt, auf effiziente Weise ableiten und berechnen.

In vorteilhafter Weise können zur Ermittlung der Aktivitätsattribute für einen Raumpunkt die Aktivitätsdaten eines in dem Raumpunkt lokalisierten und/oder protokollierten mobilen Endgeräts berücksichtigt werden, so dass die physische Beschaffenheit in dem Raumpunkt die physische Beschaffenheit des den Raumpunkt umgebenden Raumbereichs prägt. Somit lässt sich auf effiziente Weise die Aktivitätsattribute für eine Vielzahl von Raumpunkten und dadurch die Aktivitätsattribute für Raumbereiche des gebauten Raums bestimmen, so dass in Kenntnis der physischen Beschaffenheit dann ein vorgegebener Raumtyp dem jeweiligen Raumbereich zuordenbar ist.

In vorteilhafter Weise können die Raumbereiche des gebauten Raums unter Berücksichtigung von Raumpunkten aufgespannt werden, wobei die Raumpunkte lokalisierten und/oder protokollierten Standorten eines oder mehrerer mobiler Endgeräte entsprechen. Somit ist denkbar, dass verschiedene Standorte der mobilen Endgeräte über einen vorgegebenen oder vorgebbaren Zeitverlauf hinweg gespeichert werden, so dass durch Analyse der sich daraus ergebenden Aufenthalts- und/oder Bewegungsprofils der mobilen Endgeräte an zahlreichen Raumpunkten des gebauten Raums Informationen über die an diesen Raumpunkten vorliegende physische Beschaffenheit abgeleitet werden können. Schließlich kann den Raumpunkten bzw. einem durch mehrere Raumpunkte aufgespannten Raumbereich ein vorgegebener Raumtyp zugeordnet werden.

Basierend auf empfangenen Aktivitätsdaten können von einer Analyseeinheit die Aktivitätsattribute, vorzugsweise für eine Vielzahl von Raumpunkten, ermittelt werden.

In vorteilhafter Weise können die Aktivitätsattribute eine Bewegungsinformation für die Raumpunkte umfassen. Die Bewegungsinformation kann eine Information über eine Geschwindigkeit und/oder eine Fortbewegung eines mobilen Endgerätes in einer vorgebbaren Umgebung bzw. in einem vorgebbaren Umgebungsbereich der Raumpunkte umfassen. Es kann also eine Methode zur Ermittlung von Bewegungsinformationen genutzt werden. Beispielsweise wird anhand von Aktivitätsdaten der mobilen Endgeräte ermittelt, ob sich Objekte, insbesondere die mobilen Endgeräte bzw. deren menschlichen Benutzer, durch den gebauten Raum bewegen. Beispielsweise könnte dadurch ermittelt werden, ob der menschliche Benutzer des mobilen Endgerätes Bewegungen wie Gehen, Bummeln, Walken, Laufen, Fahren und/oder Fliegen etc. durchführt. Die genannten Bewegungsbeispiele sind lediglich beispielhaft genannt, um das zugrundeliegende Konzept zu erläutern. Durch Kenntnis von Bewegungsinformationen lassen sich somit auf raffinierte Weise Rückschlüsse auf die physische Beschaffenheit von Raumpunkten bzw. von Raumbereichen des gebauten Raums ziehen und damit den Raumtyp verschiedener Raumbereiche des gebauten Raums bestimmen.

In vorteilhafter Weise können die Aktivitätsattribute eine Routineinformation für die Raumpunkte umfassen. Die Routineinformation kann eine Information über eine Verweildauer eines mobilen Endgeräts in einer vorgebbaren Umgebung bzw. in einem vorgebbaren Umgebungsbereich der Raumpunkte umfassen. Es kann also eine Methode zur Ermittlung von Routineinformationen genutzt werden. Beispielsweise werden anhand von Aktivitätsdaten der mobilen Endgeräte Distanzen ermittelt und/oder wie lange Objekte, insbesondere die mobilen Endgeräte bzw. deren menschlichen Benutzer, innerhalb einer bestimmten Distanz im gebauten Raum verweilen. Zum Beispiel kann ein längerer Zeitraum (wie etwa im groben Bereich um 8 Stunden herum) auf Schlafen/Arbeiten hinweisen, ein mittlerer Zeitraum (wie etwa im groben Bereich um 4 Stunden herum) auf Oper/Theater hinweisen und/oder ein kürzerer Zeitraum (wie etwa im groben Bereich um 2 Stunden herum) auf Kino/Restaurant hinweisen, etc. Die Zeitangaben sind lediglich beispielhaft genannt, um das zugrundeliegende Konzept zu erläutern. Durch Kenntnis von Routineinformationen lassen sich somit auf raffinierte Weise Rückschlüsse auf die physische Beschaffenheit von Raumpunkten bzw. von Raumbereichen des gebauten Raums ziehen und dadurch dann der jeweilige Raumtyp von verschiedenen Raumbereichen des gebauten Raums bestimmen.

In vorteilhafter Weise können die Aktivitätsattribute eine Dichteinformation für die Raumpunkte umfassen. Die Dichteinformation kann eine Information über eine Anzahl von mobilen Endgeräten in einer vorgebbaren Umgebung bzw. in einem vorgebbaren Umgebungsbereich der Raumpunkte umfassen. Es kann also eine Methode zur Ermittlung von Dichteinformationen genutzt werden. Beispielsweise wird anhand von Aktivitätsdaten der mobilen Endgeräte ermittelt, ob sich mehrere Objekte, insbesondere mehrere mobilen Endgeräte bzw. deren menschlichen Benutzer, im selben Bereich des gebauten Raums bewegen. Beispielsweise könnte dadurch ermittelt werden, ob aufgrund der ermittelten Frequenz bzw. der Frequentierung eines, ggf. berücksichtigten, Raumbereichs es sich möglicherweise um eine Fußgängerzone oder ein Wohnraum oder beispielsweise auch um einen Verkehrsweg handelt. Durch Kenntnis von Dichteinformationen lassen sich somit auf raffinierte Weise Rückschlüsse auf die physische Beschaffenheit von Raumpunkten bzw. von Raumbereichen des gebauten Raums ziehen und damit den Raumtyp verschiedener Raumbereiche des gebauten Raums bestimmen.

In vorteilhafter Weise können die Aktivitätsattribute eine Niveauinformation für die Raumpunkte umfassen. Die Niveauinformation kann eine Information über eine Höhenlage von einem mobilen Endgerät in den Raumpunkten umfassen. Es kann also eine Methode zur Ermittlung der Höhenlage von Objekten in einem Bereich des gebauten Raums genutzt werden. Beispielsweise wird anhand von Aktivitätsdaten der mobilen Endgeräte ermittelt, in welcher (ggf. relativen und/oder absoluten) Höhe sich die Objekte, insbesondere die mobilen Endgeräte bzw. deren menschlichen Benutzer, im selben Bereich des gebauten Raums befinden. Zum Beispiel kann die Eigenschaft ebenerdig auf eine Straße, einen Platz oder einen Park etc. hinweisen. Die Eigenschaft mehrgeschossig könnte auf ein Haus, ein Shopping-Center oder ein Theater etc. hinweisen. Die genannten Eigenschaften sind lediglich beispielhaft genannt, um das zugrundeliegende Konzept zu erläutern. Durch Kenntnis von Niveauinformationen lassen sich somit auf raffinierte Weise Rückschlüsse auf die physische Beschaffenheit von Raumpunkten bzw. von Raumbereichen des gebauten Raums ziehen und damit den Raumtyp verschiedener Raumbereiche des gebauten Raums bestimmen.

In vorteilhafter Weise lässt sich gemäß einer Ausführungsform der Erfindung anhand von vier Aktivitätsattributen leiblicher Anwesenheit der Gebrauch des Raumes quantifizierbar machen. Demnach kann sich ein Aktivitätsattribut auf die Anwesenheit von einer Person bzw. auf ein von der Person bei sich getragenem mobilen Endgerät beziehen. Ein erstes Aktivitätsattribut kann beispielsweise eine Bewegungsinformation umfassen, also zum Beispiel eine Information in Bezug auf die Bewegung eines mobilen Endgeräts an einem Raumpunkt des gebauten Raums. Ein zweites Aktivitätsattribut kann beispielsweise eine Routineinformation umfassen, also zum Beispiel eine Information in Bezug auf die Routine eines mobilen Endgeräts an einem Raumpunkt des gebauten Raums. Ein drittes Aktivitätsattribut kann beispielsweise eine Dichteinformation umfassen, also zum Beispiel eine Information in Bezug auf die Dichte von mobilen Endgeräten an einem Raumpunkt des gebauten Raums. Ein viertes Aktivitätsattribut kann beispielsweise eine Niveauinformation umfassen, also zum Beispiel eine Information in Bezug auf das (Höhen-)Niveau eines mobilen Endgeräts an einem Raumpunkt des gebauten Raums.

Zur Bestimmung von Aktivitätsattributen für Raumpunkte - insbesondere in Bezug auf Bewegung, Routine, Dichte und Niveau von an den Raumpunkten lokalisierten Personen bzw. deren mobilen Endgeräten - kann zum Beispiel die Analyseeinheit so konfiguriert sein, dass basierend auf den Aktivitätsdaten repräsentative Parameterwerte als Aktivitätsattribute für die Raumpunkte berechnet werden:

- BEWEGUNG: Ermittlung bzw. Berechnung eines Bewegungsparameters als Bewegungsinformation, der Geschwindigkeiten von Objekten bzw. von mobilen Endgeräten im Raum berücksichtigt. Somit kann die Geschwindigkeit von Personen anhand der von Ihnen getragenen mobilen Endgeräte abgeleitet werden.
- ROUTINE: Ermittlung bzw. Berechnung eines Routineparameters als Routineinformation, der einen Verbleib bzw. eine Verweildauer von Objekten bzw. von mobilen Endgeräten im Raum, insbesondere innerhalb einer vorgebbaren Umgebung von einem oder mehreren Raumpunkten, berücksichtigt. Somit kann die Verweildauer von Personen anhand der von ihnen getragenen mobilen Endgeräte innerhalb eines anhand von Raumpunkten ermittelten Raumbereichs abgeleitet werden.
- DICHTE: Ermittlung bzw. Berechnung eines Dichteparameters als Dichteinformation, der eine Anzahl von Objekten bzw. von mobilen Endgeräten innerhalb eines Raums, insbesondere innerhalb einer vorgebbaren Umgebung von einem oder mehreren Raumpunkten, berücksichtigt. Somit kann eine Dichteinformation von Personen anhand der von ihnen getragenen mobilen Endgeräte abgeleitet werden.
- NIVEAU: Ermittlung bzw. Berechnung eines Niveauparameters als Niveauinformation, der Höhenlagen von Objekten bzw. von mobilen Endgeräten im Raum berücksichtigt, wobei sich eine Höhe (zum Beispiel absolut und/oder relativ) auf eine Höheninformation eines mobilen Endgeräts in Bezug auf die "Höhe gegenüber dem Boden" beziehen kann. Somit kann eine Höhenlage von Personen anhand der von ihnen getragenen mobilen Endgeräte abgeleitet werden.

Ferner wird im Rahmen der vorliegenden Erfindung ein Computerprogramm vorgeschlagen, das bei Ablauf auf einem Computer oder Computer-Netzwerk das erfindungsgemäße Verfahren in einer seiner Ausgestaltungen ausführt.

Weiterhin wird im Rahmen der vorliegenden Erfindung ein Computerprogramm mit Programmcode-Mitteln vorgeschlagen, um das erfindungsgemäße Verfahren in einer seiner Ausgestaltungen durchzuführen, wenn das Programm auf einem Computer oder Computer-Netzwerk ausgeführt wird. Insbesondere können die Programmcode-Mittel auf einem computerlesbaren Datenträger und/oder einem computerlesbaren Speichermedium gespeichert sein.

Der Begriffe "computerlesbarer Datenträger" und "computerlesbares Speichermedium", wie sie hier verwendet werden, können sich insbesondere auf nicht-transitorische Datenspeicher beziehen, beispielsweise ein Hardware-Datenspeichermedium, auf welchem computer-ausführbare Instruktionen gespeichert sind. Der computerlesbare Datenträger oder das computerlesbare Speichermedium können insbesondere ein Speichermedium wie ein Random-Access Memory (RAM) und/oder ein Read-only Memory (ROM) sein oder umfassen.

Außerdem wird im Rahmen der vorliegenden Erfindung ein Datenträger vorgeschlagen, auf dem eine Datenstruktur gespeichert ist, die nach einem Laden in einen Arbeits- und/oder Hauptspeicher eines Computers oder Computer-Netzwerkes das erfindungsgemäße Verfahren in einer seiner Ausgestaltungen ausführen kann.

Weiterhin wird im Rahmen der vorliegenden Erfindung ein nicht-transientes computerlesbares Medium vorgeschlagen, umfassend Instruktionen, die, wenn sie von einem oder mehreren Prozessoren ausgeführt werden, den einen oder die mehreren Prozessoren dazu veranlassen, das erfindungsgemäße Verfahren in einer seiner Ausgestaltungen auszuführen.

Auch wird im Rahmen der vorliegenden Erfindung ein Computerprogramm-Produkt mit auf einem maschinenlesbaren Träger gespeicherten Programmcode-Mitteln vorgeschlagen, um das erfindungsgemäße Verfahren in einer seiner Ausgestaltungen durchzuführen, wenn das Programm auf einem Computer oder Computer-Netzwerk ausgeführt wird.

Dabei wird unter einem Computer-Programmprodukt das Programm als handelbares Produkt verstanden. Es kann grundsätzlich in beliebiger Form vorliegen, so zum Beispiel auf Papier oder einem computerlesbaren Datenträger und kann insbesondere über ein Datenübertragungsnetz verteilt werden.

Schließlich wird im Rahmen der vorliegenden Erfindung ein moduliertes Datensignal vorgeschlagen, welches von einem Computersystem oder Computernetzwerk ausführbare Instruktionen zum Ausführen eines Verfahrens nach einer der beschriebenen Ausführungsformen enthält.

Im Hinblick auf die computer-implementierten Aspekte der Erfindung können einer, mehrere oder sogar alle Verfahrensschritte des Verfahrens gemäß einer oder mehreren der hier vorgeschlagenen Ausgestaltungen mittels eines Computers oder Computer-Netzwerks durchgeführt werden. Somit können, allgemein, jegliche der Verfahrensschritte, einschließlich der Bereitstellung und/oder Manipulation von Daten mittels eines Computers oder Computer-Netzwerks durchgeführt werden. Allgemein können diese Schritte jegliche der Verfahrensschritte umfassen, ausgenommen der Schritte, welche manuelle Arbeit erfordern, beispielsweise das Bereitstellen von Proben und/oder bestimmte Aspekte der Durchführung tatsächlicher Messungen.

Zusammenfassend werden, ohne Beschränkung weiterer möglicher Ausgestaltungen, folgende Ausführungsformen vorgeschlagen:

Ausführungsform 1: Computerimplementiertes Verfahren zum Ermitteln von Raumtypen von Raumbereichen eines gebauten Raums, umfassend:

- Empfangen von Aktivitätsdaten, wobei die Aktivitätsdaten Informationen über Aufenthalts- und/oder Bewegungsprofile von mobilen Endgeräten umfassen, wobei die mobilen Endgeräte an Raumpunkten des gebauten Raums lokalisiert und/oder protokolliert worden sind;
- Berechnen eines oder mehrerer Aktivitätsattribute für einen oder mehrere Raumpunkte in einem Raumbereich auf Basis der Aktivitätsdaten;
- Ermitteln der Raumtypen für die Raumbereiche des gebauten Raums, wobei basierend auf den Aktivitätsattributen der Raumpunkte eine physische Beschaffenheit des Raumbereichs ermittelt wird, so dass in Abhängigkeit der physischen Beschaffenheit der Raumtyp des Raumbereichs bestimmt wird.

Ausführungsform 2: Computerimplementiertes Verfahren zum Ermitteln von Raumtypen von Raumbereichen eines gebauten Raums, umfassend:

- Empfangen von Aktivitätsdaten, wobei die Aktivitätsdaten Informationen über Aufenthalts- und/oder Bewegungsprofile von mobilen Endgeräten umfassen, wobei die mobilen Endgeräte an Raumpunkten des gebauten Raums lokalisiert und/oder protokolliert worden sind;
- Ermitteln der Raumtypen für die Raumbereiche des gebauten Raums, wobei auf Basis der Aktivitätsdaten ein oder mehrere Aktivitätsattribute für einen oder mehrere Raumpunkte in einem Raumbereich berechnet werden, wobei basierend auf den Aktivitätsattributen der Raumpunkte eine physische Beschaffenheit des Raumbereichs ermittelt wird, so dass in Abhängigkeit der physischen Beschaffenheit der Raumtyp des Raumbereichs bestimmt wird.

Ausführungsform 3: Verfahren nach einer der vorhergehenden Ausführungsformen, wobei das Ermitteln von Raumtypen für Raumbereiche des gebauten Raums mittels einer Analyseeinheit erfolgt.

Ausführungsform 4: Verfahren nach einer der vorhergehenden Ausführungsformen, wobei die physische Beschaffenheit der Raumbereiche eine erste Beschaffenheitseigenschaft umfasst, wobei die erste Beschaffenheitseigenschaft einen Raumbereich als INNEN oder als AUSSEN charakterisiert.

Ausführungsform 5: Verfahren nach einer der vorhergehenden Ausführungsformen, wobei die physische Beschaffenheit der Raumbereiche eine zweite Beschaffenheitseigenschaft umfasst, wobei die zweite Beschaffenheitseigenschaft einen Raumbereich als OFFEN oder als UMSCHLOSSEN charakterisiert.

Ausführungsform 6: Verfahren nach einer der vorhergehenden Ausführungsformen, wobei einer oder mehrere der folgenden Raumtypen vorgesehen sind:

- ein erster Raumtyp für Raumbereiche, die INNEN und UMSCHLOSSEN ausgebildet sind;
- ein zweiter Raumtyp für Raumbereiche, die INNEN und OFFEN ausgebildet sind;
- ein dritter Raumtyp für Raumbereiche, die AUSSEN und UMSCHLOSSEN ausgebildet sind;
- ein vierter Raumtyp für Raumbereiche, die AUSSEN und OFFEN ausgebildet sind.

Ausführungsform 7: Verfahren nach einer der vorhergehenden Ausführungsformen, ferner umfassend:

- Bereitstellen eines Raummodells für den gebauten Raum, wobei das Raummodell mehrere Raumtypen umfasst, und wobei einem Raumbereich des gebauten Raums auf Basis einer physischen Beschaffenheit des Raumbereichs ein Raumtyp des Raummodells zuordenbar ist.

Ausführungsform 8: Verfahren nach einer der vorhergehenden Ausführungsformen, wobei die erste Beschaffenheitseigenschaft und die zweite Beschaffenheitseigenschaft derart kombiniert werden, dass das Raummodell einen oder mehrere der folgenden Raumtypen umfasst:

- einen ersten Raumtyp für Raumbereiche, die INNEN und UMSCHLOSSEN ausgebildet sind;
- einen zweiten Raumtyp für Raumbereiche, die INNEN und OFFEN ausgebildet sind;
- einen dritten Raumtyp für Raumbereiche, die AUSSEN und UMSCHLOSSEN ausgebildet sind;
- einen vierten Raumtyp für Raumbereiche, die AUSSEN und OFFEN ausgebildet sind.

Ausführungsform 9: Verfahren nach einer der vorhergehenden Ausführungsformen, wobei die Aktivitätsdaten eines mobilen Endgeräts Standort-Datensätze umfassen, wobei jeder Standort-Datensatz umfasst:

- einen Zeitstempel;
- eine Information über den Standort des mobilen Endgeräts zum Zeitpunkt des Zeitstempels.

Ausführungsform 10: Verfahren nach einer der vorhergehenden Ausführungsformen, wobei jeder Standort-Datensatz ferner umfasst:

- eine Information über die Höhenlage des mobilen Endgeräts zum Zeitpunkt des Zeitstempels.

Ausführungsform 11: Verfahren nach einer der vorhergehenden Ausführungsformen, wobei die Standort-Datensätze der Aktivitätsdaten des mobilen Endgeräts in zeitlicher Abfolge geordnet sind.

Ausführungsform 12: Verfahren nach einer der vorhergehenden Ausführungsformen, wobei zur Ermittlung der Aktivitätsattribute für einen Raumpunkt die Aktivitätsdaten eines in dem Raumpunkt lokalisierten und/oder protokollierten mobilen Endgeräts berücksichtigt werden.

Ausführungsform 13: Verfahren nach einer der vorhergehenden Ausführungsformen, wobei die Raumbereiche des gebauten Raums unter Berücksichtigung von Raumpunkten aufgespannt werden, wobei die Raumpunkte lokalisierten und/oder protokollierten Standorten eines oder mehrerer mobiler Endgeräte entsprechen.

Ausführungsform 14: Verfahren nach einer der vorhergehenden Ausführungsformen, wobei die Aktivitätsattribute eine Bewegungsinformation für die Raumpunkte umfassen, wobei die Bewegungsinformation eine Information über eine Geschwindigkeit und/oder eine Fortbewegung eines mobilen Endgerätes in einer vorgebbaren Umgebung der Raumpunkte umfasst.

Ausführungsform 15: Verfahren nach einer der vorhergehenden Ausführungsformen, wobei die Aktivitätsattribute eine Routineinformation für die Raumpunkte umfassen, wobei die Routineinformation eine Information über eine Verweildauer eines mobilen Endgeräts in einer vorgebbaren Umgebung der Raumpunkte umfasst.

Ausführungsform 16: Verfahren nach einer der vorhergehenden Ausführungsformen, wobei die Aktivitätsattribute eine Dichteinformation für die Raumpunkte umfassen, wobei die Dichteinformation eine Information über eine Anzahl von mobilen Endgeräten in einer vorgebbaren Umgebung der Raumpunkte umfasst.

Ausführungsform 17: Verfahren nach einer der vorhergehenden Ausführungsformen, wobei die Aktivitätsattribute eine Niveauinformation für die Raumpunkte umfassen, wobei die Niveauinformation eine Information über eine Höhenlage von einem mobilen Endgerät in den Raumpunkten umfasst.

Ausführungsform 18: Computerprogramm, welches bei Ablauf auf einem Computer oder Computer-Netzwerk das Verfahren nach einer der vorhergehenden Ausführungsformen ausführt.

Ausführungsform 19: Speichermedium, in dem computerausführbare Befehle gespeichert sind und die computerausführbaren Befehle, wenn sie in einen Haupt- und/oder Arbeitsspeicher eines Computersystems geladen und von einem Prozessor des Computersystems ausgeführt werden, das Computersystem veranlassen, das Verfahren gemäß einer der vorhergehenden Ausführungsformen auszuführen.

Ausführungsform 20: Co-Prozessor und/oder Computergerät, das ein Speichermedium nach der vorhergehenden Ausführungsform umfasst.

**Kurze Beschreibung der Figuren**

Weitere Einzelheiten und Merkmale ergeben sich aus der nachfolgenden Beschreibung von Ausführungsbeispielen, insbesondere in Verbindung mit den abhängigen Ansprüchen. Hierbei können die jeweiligen Merkmale für sich alleine oder zu mehreren in Kombination miteinander verwirklicht sein. Die Erfindung ist nicht auf die Ausführungsbeispiele beschränkt. Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente.
Im Einzelnen zeigen:

Fig. 1A        zeigt in einer schematischen Ansicht eine Veranschaulichung eines Verfahrens zum Ermitteln von Raumtypen von Raumbereichen eines gebauten Raums gemäß eines Ausführungsbeispiels der Erfindung;

Fig. 1B        zeigt in einer schematischen Ansicht eine Veranschaulichung eines Verfahrens zum Ermitteln von Raumtypen von Raumbereichen eines gebauten Raums gemäß eines weiteren Ausführungsbeispiels der Erfindung;

Fig. 1C        zeigt in einer schematischen Ansicht eine Veranschaulichung eines Verfahrens zum Ermitteln von Raumtypen von Raumbereichen eines gebauten Raums gemäß eines weiteren Ausführungsbeispiels der Erfindung;

Fig. 1D        zeigt in einer schematischen Ansicht eine Veranschaulichung eines Verfahrens zum Ermitteln von Raumtypen von Raumbereichen eines gebauten Raums gemäß eines weiteren Ausführungsbeispiels der Erfindung;

Fig. 2         zeigt in einer schematischen Ansicht eine Veranschaulichung eines Raummodells für ein Verfahren zum Ermitteln von Raumtypen von Raumbereichen eines gebauten Raums gemäß eines Ausführungsbeispiels der Erfindung;

Fig. 3        zeigt in einer schematischen Ansicht eine Veranschaulichung von Aktivitätsdaten und daraus abgeleiteten Aktivitätsattributen für ein Verfahren zum Ermitteln von Raumtypen von Raumbereichen eines gebauten Raums gemäß eines Ausführungsbeispiels der Erfindung;

Fig. 4A-4D    zeigen in einer schematischen Ansicht eine Veranschaulichung von Klassifizierungsprozessen zur Bestimmung vom Raumtypen für ein Verfahren zum Ermitteln eines von Raumtypen von Raumbereichen eines gebauten Raums gemäß eines Ausführungsbeispiels der Erfindung;

Fig. 5        zeigt in einer schematischen Ansicht eine beispielhafte Veranschaulichung von drei aufgezeichneten Aufenthalts- und Bewegungsprofilen von Personen bzw. von deren mobilen Endgeräten an Raumpunkten eines gebauten Raums;

Fig. 6        zeigt in einer schematischen 3D-Ansicht eine Veranschaulichung der drei aufgezeichneten Aufenthalts- und Bewegungsprofilen von Personen bzw. von deren mobilen Endgeräten an Raumpunkten eines gebauten Raums gemäß Fig. 5;

Fig. 7        zeigt in einer schematischen Ansicht eine beispielhafte Veranschaulichung der Bestimmung der Raumtypen basierend auf Aktivitätsattributen zu aufgezeichneten Aufenthalts- und Bewegungsprofilen; und

Fig. 8        zeigt in einer schematischen Ansicht eine beispielhafte Veranschaulichung eines Verfahrens zum Ermitteln von Raumtypen von Raumbereichen eines gebauten Raums gemäß eines Ausführungsbeispiels der Erfindung.

**Beschreibung der Ausführungsbeispiele**

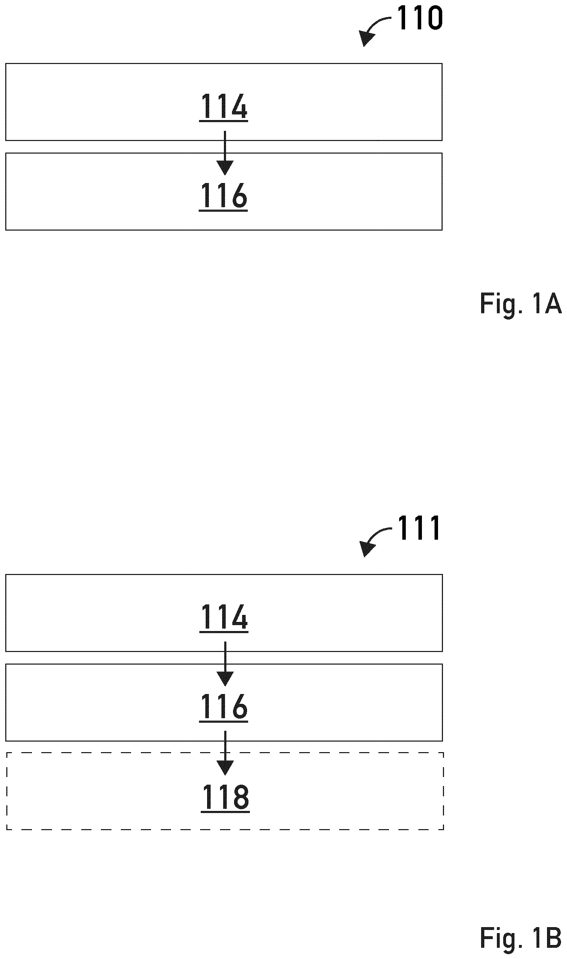

Fig. 1A zeigt in einer schematischen Ansicht eine Veranschaulichung eines computerimplementierten Verfahrens 110 zum Ermitteln von Raumtypen von Raumbereichen eines gebauten Raums gemäß einem Ausführungsbeispiel der Erfindung.

Das Verfahren 110 zum Ermitteln von Raumtypen von Raumbereichen eines gebauten Raums wird von einem Computersystem ausgeführt und umfasst die folgenden Schritte:

-    Empfangen von Aktivitätsdaten (gemäß Schritt 114), wobei die Aktivitätsdaten Informationen über Aufenthalts- und/oder Bewegungsprofile von mobilen Endgeräten umfassen, wobei die mobilen Endgeräte an Raumpunkten des gebauten Raums lokalisiert und/oder protokolliert worden sind; und

-    Ermitteln der Raumtypen für die Raumbereiche des gebauten Raums (gemäß Schritt 116), wobei auf Basis der Aktivitätsdaten ein oder mehrere Aktivitätsattribute für einen oder mehrere Raumpunkte in einem Raumbereich berechnet werden, wobei basierend auf den Aktivitätsattributen der Raumpunkte eine physische Beschaffenheit des Raumbereichs ermittelt wird, so dass in Abhängigkeit der physischen Beschaffenheit dem Raumbereich ein Raumtyp zugeordnet wird bzw. so dass in Abhängigkeit der physischen Beschaffenheit der Raumtyp des Raumbereichs bestimmt wird.

Fig. 1B zeigt in einer schematischen Ansicht eine Veranschaulichung eines Verfahrens 111 zum Ermitteln von Raumtypen von Raumbereichen eines gebauten Raums gemäß einem weiteren Ausführungsbeispiel der Erfindung, wobei die Schritte 114 und 116 dem Ausführungsbeispiel aus Fig. 1A entsprechen können.

Gemäß einem optionalen Schritt 118 können die an zahlreichen Raumpunkten des gebauten Raums bzw. für die Raumbereiche des gebauten Raums ermittelten Raumtypen auf einer Raumkarte graphisch visualisiert werden. Die Raumkarte kann beispielsweise in Form eine Heatmap ausgeführt sein, nämlich mittels einer farbcodierten Datenvisualisierung. Somit können die Ergebnisse hinsichtlich der Ermittlung eines funktionalen Gebrauchs der Raumbereiche des gebauten Raums innerhalb verschiedener Bereiche der Raumkarte grafisch visualisiert werden, beispielsweise auch in Form eines Schwarzplans mit schichtenweiser Darstellung (Layer) der vier Raumtypen.

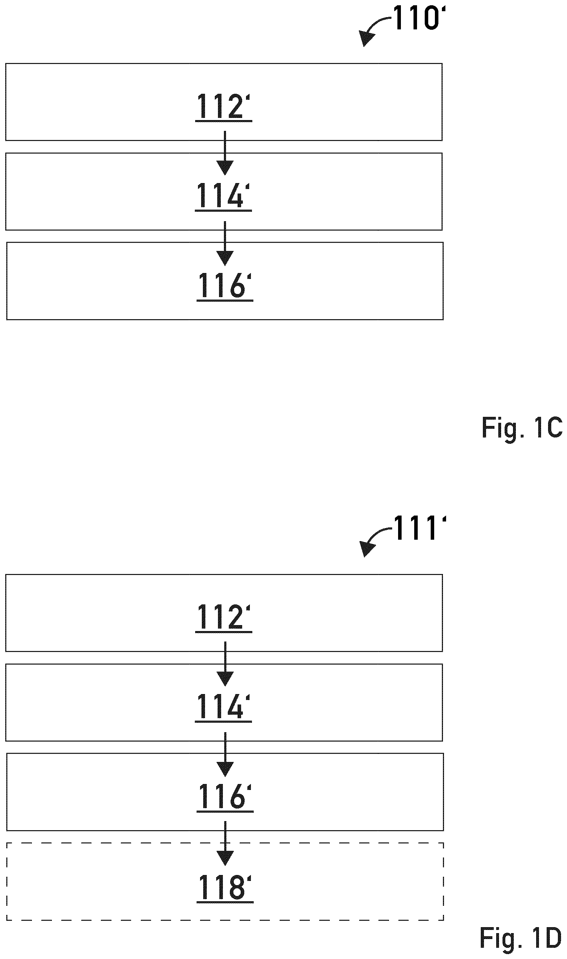

Fig. 1C zeigt in einer schematischen Ansicht eine Veranschaulichung eines Verfahrens 110' zum Ermitteln von Raumtypen von Raumbereichen eines gebauten Raums gemäß eines weiteren Ausführungsbeispiels der Erfindung.

Das Verfahren 110' zum Ermitteln eines funktionalen Gebrauchs bzw. von Raumtypen von Raumbereichen eines gebauten Raums wird von einem Computersystem ausgeführt und umfasst die folgenden Schritte:

-    Bereitstellen eines Raummodells für den gebauten Raum (gemäß Schritt 112'), wobei das Raummodell mehrere Raumtypen umfasst, und wobei einem Raumbereich des gebauten Raums auf Basis einer physischen Beschaffenheit des Raumbereichs ein Raumtyp des Raummodells zuordenbar ist;

- Empfangen von Aktivitätsdaten (gemäß Schritt 114'), wobei die Aktivitätsdaten Informationen über Aufenthalts- und/oder Bewegungsprofile von mobilen Endgeräten umfassen, wobei die mobilen Endgeräte an Raumpunkten des gebauten Raums lokalisiert und/oder protokolliert worden sind; und

- Ermitteln von Raumtypen für die Raumbereiche des gebauten Raums (gemäß Schritt 116'), wobei auf Basis der Aktivitätsdaten ein oder mehrere Aktivitätsattribute für einen oder mehrere Raumpunkte in einem Raumbereich ermittelt werden, wobei basierend auf den Aktivitätsattributen der Raumpunkte die physische Beschaffenheit des Raumbereichs ermittelt wird, so dass in Abhängigkeit der physischen Beschaffenheit dem Raumbereich ein Raumtyp zugeordnet wird bzw. so dass in Abhängigkeit der physischen Beschaffenheit der Raumtyp des Raumbereichs bestimmt wird.

Fig. 1D zeigt in einer schematischen Ansicht eine Veranschaulichung eines Verfahrens 111' zum Ermitteln eines funktionalen Gebrauchs bzw. von Raumtypen von Raumbereichen eines gebauten Raums gemäß einem weiteren Ausführungsbeispiel der Erfindung, wobei die Schritte 112', 114' und 116' dem Ausführungsbeispiel aus Fig. 1C entsprechen können.

Gemäß einem optionalen Schritt 118' können die an zahlreichen Raumpunkten des gebauten Raums bzw. für die Raumbereiche des gebauten Raums ermittelten Raumtypen auf einer Raumkarte graphisch visualisiert werden. Die Raumkarte kann beispielsweise in Form eine Heatmap ausgeführt sein, nämlich mittels einer farbcodierten Datenvisualisierung. Somit können die Ergebnisse hinsichtlich der Ermittlung eines, zum Beispiel nicht determinierten, funktionalen Gebrauchs der Raumbereiche des gebauten Raums innerhalb verschiedener Bereiche der Raumkarte grafisch visualisiert werden, beispielsweise auch in Form eines Schwarzplans mit schichtenweiser Darstellung (Layer) der vier Raumtypen.

Die Ermittlung eines funktionalen Gebrauchs von Raumbereichen eines gebauten Raums erfolgt in dynamischer Hinsicht anhand einer tatsächlichen Nutzung durch die Personen innerhalb des gebauten Raums. Dazu kann gemäß Schritt 112' zunächst ein Raummodell für den gebauten Raum bereitgestellt werden, wobei das Raummodell mehrere Raumtypen umfasst.

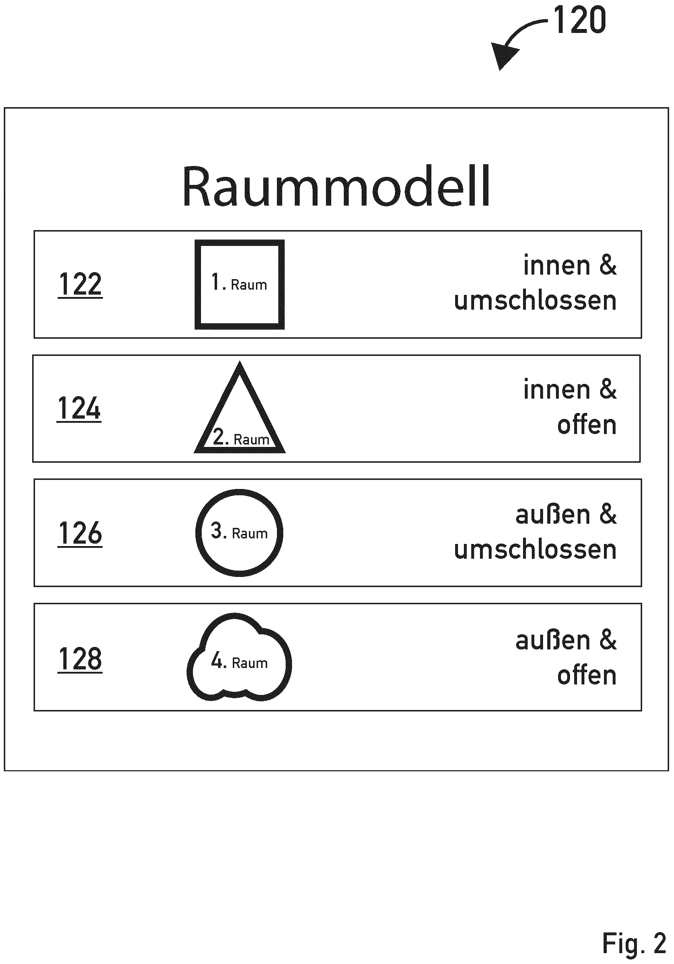

Fig. 2 zeigt in einer schematischen Ansicht eine Veranschaulichung eines Raummodells 120 für ein Verfahren zum Ermitteln von Raumtypen von Raumbereichen eines gebauten Raums gemäß eines Ausführungsbeispiels der Erfindung.

Das Raummodell 120 umfasst folgende Raumtypen:

- ERSTER RAUMTYP 122: Raumbereiche, die als INNEN und UMSCHLOSSEN ausgebildet sind;
- ZWEITER RAUMTYP 124: Raumbereiche, die als INNEN und OFFEN ausgebildet sind;
- DRITTER RAUMTYP 126: Raumbereiche, die als AUSSEN und UMSCHLOSSEN ausgebildet sind;
- VIERTER RAUMTYP 128: Raumbereiche, die als AUSSEN und OFFEN ausgebildet sind.

Somit kann ein Raummodell 120 bereitgestellt werden, das das Verhältnis zwischen Mensch und Raum mittels vier möglichen elementaren Konstellationen abbilden kann. Der erste Raumtyp 122 beschreibt Raumbereiche, die INNEN und UMSCHLOSSEN ausgebildet sind. Beim ersten Raumtyp 122 befinden sich Menschen in einem Innenraum mit eingeschränktem Zugang. Zum Beispiel: Wohnung, Büro, Praxis, Werkstatt etc. Der zweite Raumtyp 124 beschreibt Raumbereiche, die INNEN und OFFEN ausgebildet sind. Beim zweiten Raumtyp 124 befinden sich Menschen in einem Innenraum mit freiem Zugang. Zum Beispiel: Kirche, Bahnhof, Café, Center, Theater etc. Der dritte Raumtyp 126 beschreibt Raumbereiche, die AUSSEN und UMSCHLOSSEN ausgebildet sind. Beim dritten Raumtyp 126 befinden sich Menschen in einem Außenraum mit eingeschränktem Zugang. Zum Beispiel: Stadion, Freibad, Friedhof, Schlosspark, Zoo etc. Der vierte Raumtyp 128 beschreibt Raumbereiche, die AUSSEN und OFFEN ausgebildet sind. Beim vierten Raumtyp 128 befinden sich Menschen demnach in einem Außenraum mit freiem Zugang. Zum Beispiel: Straße, Platz, Parkanlage, etc.

Um den unterschiedlichen Raumbereichen des gebauten Raums einen Raumtyp entsprechend dem zuvor beschriebenen Raummodell 120 zuordnen zu können, bedarf es der Ermittlung der physischen Beschaffenheit der unterschiedlichen Raumbereiche bzw. an unterschiedlichen Raumpunkten des gebauten Raums. Basierend auf den Aktivitätsattributen der Raumpunkte kann die physische Beschaffenheit des gebauten Raums in den Raumpunkten und damit auch des die Raumpunkte umgebenden Raumbereichs ermittelt werden, so dass in Abhängigkeit der physischen Beschaffenheit einem Raumbereich ein Raumtyp zugeordnet werden kann.

Die physische Beschaffenheit der Raumbereiche kann eine erste Beschaffenheitseigenschaft umfassen, wobei die erste Beschaffenheitseigenschaft einen Raumbereich als INNEN oder als AUSSEN charakterisiert. Somit kann eine Beschaffenheitseigenschaft für einen Raumbereich festgelegt bzw. einem Raumbereich zugeordnet werden, wonach eine elementare Beschaffenheit des Raumes die Dualität von INNEN und AUSSEN berücksichtigt wird. Ein Raumbereich des gebauten Raums, der die Beschaffenheitseigenschaft INNEN aufweist ist beispielsweise ein Haus oder eine Halle. Ein Raumbereich des gebauten Raums, der die Beschaffenheitseigenschaft AUSSEN aufweist ist beispielsweise eine Straße oder ein Platz.

Die physische Beschaffenheit der Raumbereiche kann eine zweite Beschaffenheitseigenschaft umfassen, wobei die zweite Beschaffenheitseigenschaft einen Raumbereich als UMSCHLOSSEN oder als OFFEN charakterisiert. Somit kann eine Beschaffenheitseigenschaft für einen Raumbereich festgelegt bzw. einem Raumbereich zugeordnet werden, wonach eine elementare Beschaffenheit des Raumes die Dichotomie von UMSCHLOSSEN und OFFEN berücksichtigt wird. Ein Raumbereich des gebauten Raums, der die Beschaffenheitseigenschaft UMSCHLOSSEN aufweist ist beispielsweise eine Wohnung oder ein Spielplatz. Ein Raumbereich des gebauten Raums, der die Beschaffenheitseigenschaft OFFEN aufweist ist beispielsweise eine Allee oder eine Grünanlage.

Die erste Beschaffenheitseigenschaft und die zweite Beschaffenheitseigenschaft können nun derart miteinander kombiniert werden, dass eine Zuordnung und Ermittlung auf Basis des zuvor beschriebenen Raummodells 120 möglich ist.

Einem Raumbereich des gebauten Raums kann nun also auf Basis einer physischen Beschaffenheit des Raumbereichs ein Raumtyp des Raummodells 120 zugeordnet werden. Dazu werden Aktivitätsdaten gemäß Schritt 114 in Fig. 1A und Fig. 1B bzw. gemäß Schritt 114' in Fig. 1C und Fig. 1D empfangen, wobei die Aktivitätsdaten Informationen über Aufenthalts- und/oder Bewegungsprofile von mobilen Endgeräten der Personen in dem gebauten Raum umfassen. Die mobilen Endgeräte der Personen sind an Raumpunkten des gebauten Raums lokalisiert bzw. protokolliert worden.

Schließlich erfolgt gemäß Schritt 116 bzw. 116' in Fig. 1 ein Ermitteln von Raumtypen für Raumbereiche des gebauten Raums, vorzugsweise mittels einer Analyseeinheit, wobei auf Basis der Aktivitätsdaten ein oder mehrere Aktivitätsattribute für einen oder mehrere Raumpunkte in einem die Raumpunkte ggf. umgebenden Raumbereich ermittelt werden. Basierend auf den Aktivitätsattributen der Raumpunkte kann die physische Beschaffenheit des die Raumpunkte umgebenden Raumbereichs ermittelt werden, so dass in Abhängigkeit der physischen Beschaffenheit dem Raumbereich ein Raumtyp zugeordnet wird bzw. in Abhängigkeit der physischen Beschaffenheit der Raumtyp des Raumbereichs bestimmt wird.

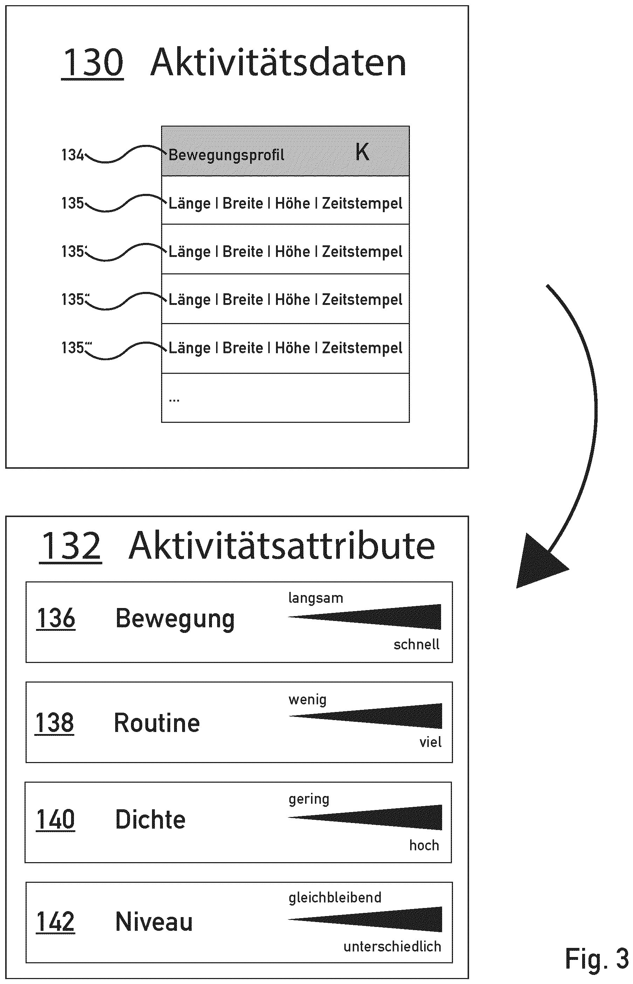

Fig. 3 zeigt in einer schematischen Ansicht eine Veranschaulichung von Aktivitätsdaten 130 und daraus abgeleiteten Aktivitätsattributen 132 für ein Verfahren zum Ermitteln eines funktionalen Gebrauchs von Raumbereichen eines gebauten Raums gemäß einem Ausführungsbeispiel der Erfindung. Die zugrundliegenden Aktivitätsdaten 130 können zahlreiche Aufenthalts- und/oder Bewegungsprofile 134 von unterschiedlichen mobilen Endgeräten umfassen. Ein Aufenthalts- und/oder Bewegungsprofil 134 eines mobilen Endgeräts kann zahlreiche Standort-Datensätze 135, 135', 135'', 135''' des mobilen Endgerätes umfassen, wobei ein Standort-Datensatz 135 eine Standortkoordinate mit dazugehörigem Zeitstempel umfassen kann. Die Standortkoordinate eines Datensatzes kann beispielsweise in Länge, Breite und Höhe gegeben sein, wobei der Datensatz zu dieser Standortkoordinate als Raumpunkt auch den entsprechenden Zeitstempel umfasst, an dem das mobile Endgerät an diesem Standort bzw. an diesem Raumpunkt lokalisiert bzw. protokolliert worden ist. Des Weiteren kann das Aufenthalts- und/oder Bewegungsprofil 134 eine Kennung K umfassen, so dass sämtlichen Standort-Datensätzen 135, 135', 135'', 135''' des Aufenthalts- und/oder Bewegungsprofils 134 eine Kennung K bzw. das dazugehörige mobile Endgerät zuordenbar ist.

Basierend auf den Aktivitätsdaten 130 können nun für jeden lokalisierten bzw. protokollierten Raumpunkt Aktivitätsattribute 132 ermittelt werden. Im Rahmen des Ausführungsbeispiels gemäß Fig. 3 kann beispielsweise mit Hilfe von vier Aktivitätsattributen leiblicher Anwesenheit der Gebrauch des gebauten Raums quantifizierbar gemacht werden. Demnach kann sich ein Aktivitätsattribut auf die Anwesenheit von einer Person bzw. auf ein von der Person bei sich getragenem mobilen Endgerät beziehen. Ein erstes Aktivitätsattribut kann beispielsweise eine Bewegungsinformation 136 umfassen, also zum Beispiel eine Information in Bezug auf die Bewegung eines mobilen Endgeräts an einem Raumpunkt des gebauten Raums. Ein zweites Aktivitätsattribut kann beispielsweise eine Routineinformation 138 umfassen, also zum Beispiel eine Information in Bezug auf die Routine eines mobilen Endgeräts an einem Raumpunkt des gebauten Raums. Ein drittes Aktivitätsattribut kann beispielsweise eine Dichteinformation 140 umfassen, also zum Beispiel eine Information in Bezug auf die Dichte von mobilen Endgeräten an einem Raumpunkt des gebauten Raums. Ein viertes Aktivitätsattribut kann beispielsweise eine Niveauinformation 142 umfassen, also zum Beispiel eine Information in Bezug auf das (Höhen-)Niveau eines mobilen Endgeräts an einem Raumpunkt des gebauten Raums.

Zur Bestimmung von Aktivitätsattributen für Raumpunkte - insbesondere in Bezug auf Bewegung, Routine, Dichte und Niveau von an den Raumpunkten lokalisierten Personen bzw. deren mobilen Endgeräten - kann zum Beispiel eine Analyseeinheit so konfiguriert sein, dass basierend auf den Aktivitätsdaten 130 repräsentative Parameterwerte als Aktivitätsattribute für die Raumpunkte berechnet werden:

- BEWEGUNG: Ermittlung bzw. Berechnung eines Bewegungsparameters als Bewegungsinformation 136, der Geschwindigkeiten von Objekten bzw. von mobilen Endgeräten im Raum berücksichtigt. Somit kann die Geschwindigkeit von Personen anhand der von Ihnen getragenen mobilen Endgeräte abgeleitet werden.
- ROUTINE: Ermittlung bzw. Berechnung eines Routineparameters als Routineinformation 138, der einen Verbleib bzw. eine Verweildauer von Objekten bzw. von mobilen Endgeräten im Raum, insbesondere innerhalb einer vorgebbaren Umgebung von einem oder mehreren Raumpunkten, berücksichtigt. Somit kann die Verweildauer von Personen anhand der von ihnen getragenen mobilen Endgeräte innerhalb eines anhand von Raumpunkten ermittelten Raumbereichs abgeleitet werden.

- DICHTE: Ermittlung bzw. Berechnung eines Dichteparameters als Dichteinformation 140, der eine Anzahl von Objekten bzw. von mobilen Endgeräten innerhalb eines Raums, insbesondere innerhalb einer vorgebbaren Umgebung von einem oder mehreren Raumpunkten, berücksichtigt. Somit kann eine Dichteinformation von Personen anhand der von ihnen getragenen mobilen Endgeräte abgeleitet werden.
- NIVEAU: Ermittlung bzw. Berechnung eines Niveauparameters als Niveauinformation 142, der Höhenlagen von Objekten bzw. von mobilen Endgeräten im Raum berücksichtigt, wobei sich eine Höhe (zum Beispiel absolut und/oder relativ) auf eine Höheninformation eines mobilen Endgeräts in Bezug auf die "Höhe gegenüber dem Boden" beziehen kann. Somit kann eine Höhenlage von Personen anhand der von ihnen getragenen mobilen Endgeräte abgeleitet werden.

Eine beispielhafte Implementierung zur Berechnung und Bestimmung der in Fig. 3 skizzierten Aktivitätsattribute 132 hinsichtlich Bewegungsinformation 136, Routineinformation 138, Dichteinformation 140 und Niveauinformation 142 kann sich an folgendem Vorgehen orientieren:

Ermittlung der Bewegungsinformation 136:

- Gegeben werden Koordinaten einer Kennung, die zu einem mobilen Endgerät gehört. Diese Koordinaten werden anhand ihres Zeitstempels geordnet.
- Jede Koordinate wird mit ihrem Nachfolger verglichen und die Entfernung bzw. der Abstand berechnet (Strecke).
- Aus den Zeitstempeln der Koordinaten ergibt sich die Zeitdifferenz zwischen den Koordinaten und ihren Nachfolgern (Zeit).
- Aus der Entfernung bzw. dem Abstand sowie der Zeitdifferenz ergibt sich die Bewegungsinformation, nämlich Strecke pro Zeit (Geschwindigkeit).
- Ein Raumbereich wird durch hohe bzw. schnelle BEWEGUNG gekennzeichnet, wenn die in physikalischer Einheit, in beispielsweise km pro Stunde gemessene Geschwindigkeit, hoch ist, also sich eine Person in dem Raumbereich schnell bewegt. Ein Raumbereich wird durch eine niedrige bzw. langsame BEWEGUNG gekennzeichnet, wenn sich die Person dort langsam bewegt. Ob die ermittelten Bewegungsparameterwerte hoch oder niedrig bzw. schnell oder langsam einzuordnen sind, kann anhand von vorgebbaren Schwellwerten und/oder vorgebbaren Wertebereichen bestimmt werden, die sich ferner an den zu analysierenden Aktivitätsdaten bzw. Eingabedaten orientieren können.

Ermittlung der Routineinformation 138:

- Um die zur Berechnung der BEWEGUNG ermittelte Strecke zwischen den Koordinaten und ihren Nachfolgern kann eine Form gezeichnet werden, beispielsweise ein Kreis. Eine solche Form, die variabel und beispielsweise auch als Polygon ausgeprägt sein kann, kann zur Berechnung der ROUTINE verwendet werden, nämlich die zwischen zwei Koordinaten berechnete Zeit pro den zwischen zwei Koordinaten aufgespannten und mittels Form dimensionierten Raumbereichs.

- Ein Raumbereich wird durch hohe bzw. viel ROUTINE gekennzeichnet, wenn der in physikalischer Einheit, in beispielsweise Stunde pro Quadratmeter gemessene Verbleib, hoch ist, also eine Person bzw. deren mobiles Endgerät in dem Raumbereich viel Zeit verbringt. Ein Raumbereich wird durch niedrige bzw. wenig ROUTINE gekennzeichnet, wenn die Person dort wenig Zeit verbringt. Auch hier gilt, ob die ermittelten Routineparameterwerte hoch oder niedrig bzw. ob die verbrachten Zeiten viel oder wenig einzuordnen sind, kann anhand von vorgebbaren Schwellwerten und/oder vorgebbaren Wertebereichen bestimmt werden, die sich ferner an den zu analysierenden Aktivitätsdaten bzw. Eingabedaten orientieren können.

Ermittlung der Dichteinformation 140:

- Nun werden alle zur Berechnung der BEWEGUNG und ROUTINE ermittelten Raumbereiche einer ersten Kennung, also eines ersten mobilen Endgeräts, zur Berechnung der DICHTE herangezogen und gezählt, wie viele Raumbereiche anderer Kennungen (d.h. von anderen mobilen Endgeräten) die ermittelten Raumbereiche der einen ersten Kennung überlappen.

- Ein Raumbereich wird durch hohe DICHTE gekennzeichnet, wenn die Anzahl hoch ist, also sich viele Personen bzw. mobile Endgeräte in dem Raumbereich befinden. Ein Raumbereich wird durch niedrige bzw. geringe DICHTE gekennzeichnet, wenn sich dort wenige Personen befinden. Auch hier gilt, ob die ermittelten Dichteparameterwerte hoch oder niedrig einzuordnen sind, kann anhand von vorgebbaren Schwellwerten und/oder vorgebbaren Wertebereichen bestimmt werden, die sich ferner an den zu analysierenden Aktivitätsdaten bzw. Eingabedaten orientieren können.

Ermittlung der Niveauinformation 142:

- Das NIVEAU ist der Höhenunterschied über dem Erdboden zwischen den zeitlich geordneten Koordinaten einer Kennung eines mobilen Endgeräts und kann sich beispielsweise aus der Addition der Höhe einer Koordinate mit der Höhe der nachfolgenden Koordinate ergeben.

- Ein Raumbereich wird durch gleichbleibendes NIVEAU gekennzeichnet, wenn die in physikalischer Einheit, in beispielsweise Meter gemessene Höhe, gleichbleibt, sich also eine Person in dem Raumbereich in ihrer Höhe nicht ändert. Ein Raumbereich wird durch unterschiedliches NIVEAU gekennzeichnet, wenn zwischen den beiden Koordinaten ein Höhenunterschied festgestellt wird. Auch hier gilt, ob die ermittelten Niveauparameterwerte als gleichbleibend oder unterschiedlich einzuordnen sind, kann anhand von vorgebbaren Schwellwerten und/oder vorgebbaren Wertebereichen bestimmt werden, die sich ferner an den zu analysierenden Aktivitätsdaten bzw. Eingabedaten orientieren können.

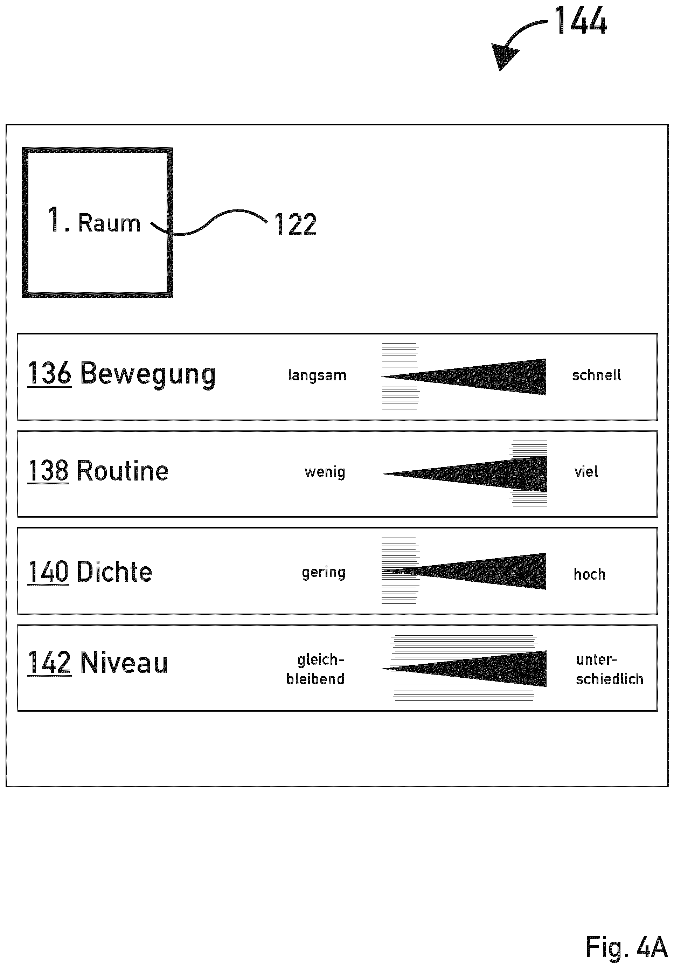

Fig. 4A bis Fig. 4D zeigen in einer schematischen Ansicht eine Veranschaulichung von Klassifizierungsprozessen zur Bestimmung vom Raumtypen für ein Verfahren zum Ermitteln eines funktionalen Gebrauchs von Raumbereichen eines gebauten Raums gemäß einem Ausführungsbeispiel der Erfindung.

Unter Verwendung der basierend auf den Aktivitätsdaten ermittelten Parameterwerte hinsichtlich BEWEGUNG, ROUTINE, DICHTE und NIVEAU können die Raumtypen beispielsweise wie folgt ermittelt werden:

ERSTER RAUMTYP 122: Der erste Raumtyp 122 wird gemäß Klassifizierungsprozess 144 in Fig. 4A für einen Raumpunkt und/oder für einen Raumbereich ermittelt, wenn die ermittelte BEWEGUNG niedrige, die ROUTINE hohe und die ermittelte DICHTE niedrige Werte aufweisen. Die damit ermittelten Raumbereiche sind INNEN und UMSCHLOSSEN ausgebildet. Bei Raumbereichen gemäß dem ersten Raumtyp befinden sich Menschen in einem Innenraum mit eingeschränktem Zugang. Zum Beispiel: Wohnung, Büro, Praxis, Werkstatt, Laden, Geschäft.

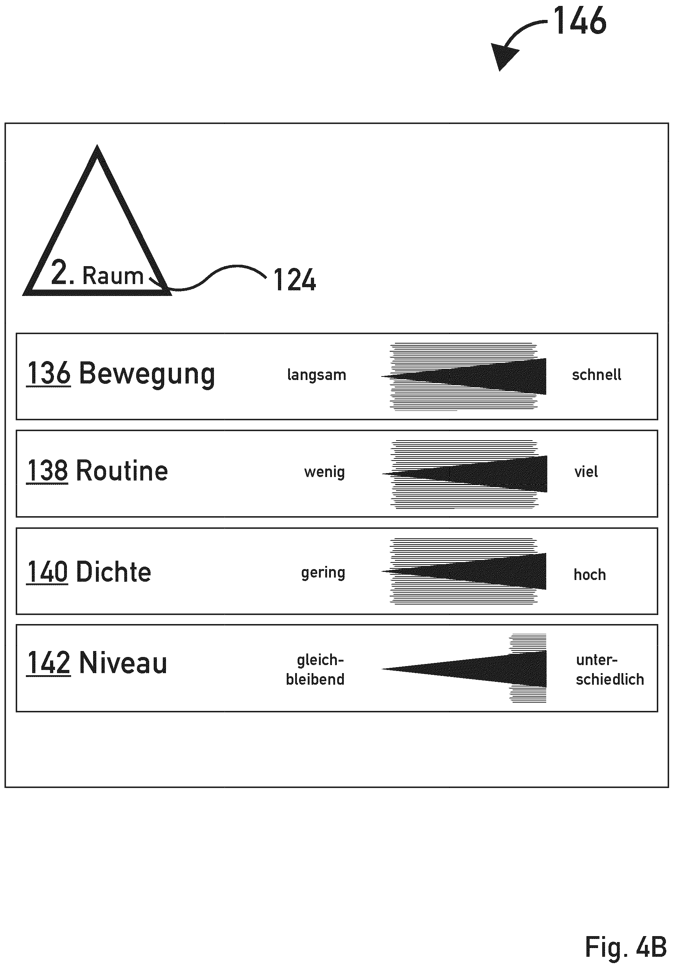

ZWEITER RAUMTYP 124: Der zweite Raumtyp 124 wird gemäß Klassifizierungsprozess 146 in Fig. 4B für einen Raumpunkt und/oder für einen Raumbereich ermittelt, wenn, nach Ermittlung von BEWEGUNG, ROUTINE und DICHTE, an dem Raumpunkt bzw. in dem Raumbereich das ermittelte NIVEAU bzw. die ermittelte Niveauinformation unterschiedliche Höhen für die dort lokalisierten mobilen Endgeräte repräsentiert und damit ein besonders hoher Niveauparameterwert festgestellt wird. Die damit ermittelten Raumbereiche sind INNEN und OFFEN ausgebildet. Bei Raumbereichen gemäß dem zweiten Raumtyp befinden sich Menschen demnach in einem Innenraum mit freiem Zugang. Zum Beispiel: Kirche, Mall, Supermarkt, Bahnhof, Café, Restaurant, Center, Theater, Kino, Museum, ÖPNV etc.

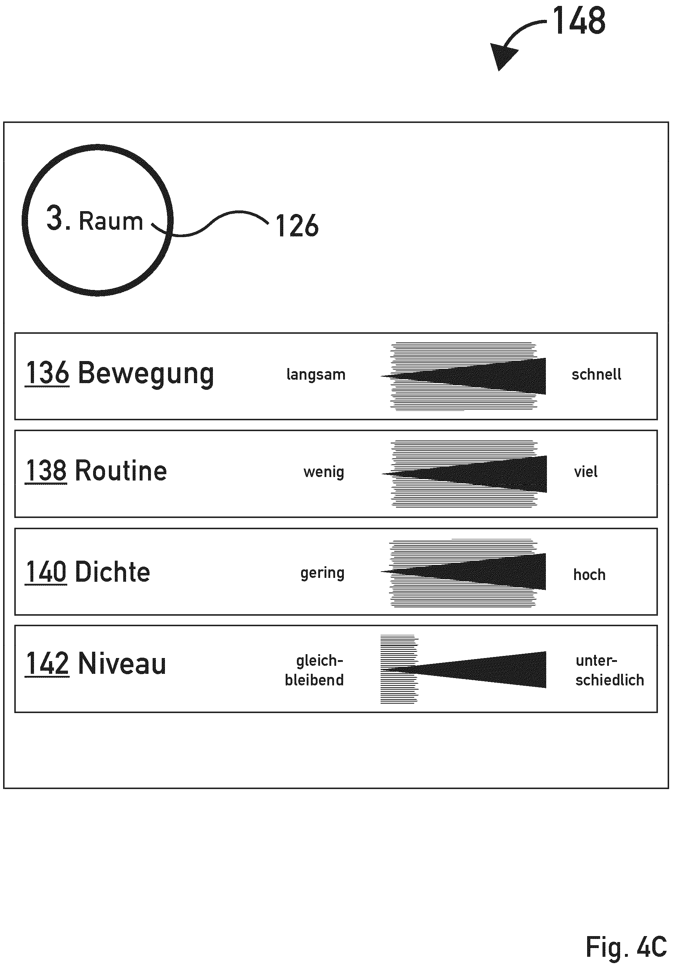

DRITTER RAUMTYP 126: Der dritte Raumtyp wird gemäß Klassifizierungsprozess 148 in Fig. 4C für einen Raumpunkt und/oder für einen Raumbereich ermittelt, wenn nach Ermittlung von BEWEGUNG, ROUTINE und DICHTE an dem Raumpunkt bzw. in dem Raumbereich das ermittelte NIVEAU bzw. die ermittelte Niveauinformation - im Wesentlichen - gleichbleibende und/oder lediglich geringfügig abweichende Höhen für die dort lokalisierten mobilen Endgeräte repräsentiert und damit ein besonders niedriger Niveauparameterwert festgestellt werden. Die damit ermittelten Raumbereiche sind AUSSEN und UMSCHLOSSEN ausgebildet. Bei Raumbereichen gemäß dem dritten Raumtyp befinden sich Menschen demnach in einem Außenraum mit eingeschränktem Zugang. Zum Beispiel: Spielplatz, Sportplatz, Stadion, Biergarten, Freibad, Friedhof, Schlosspark, Zoo etc.

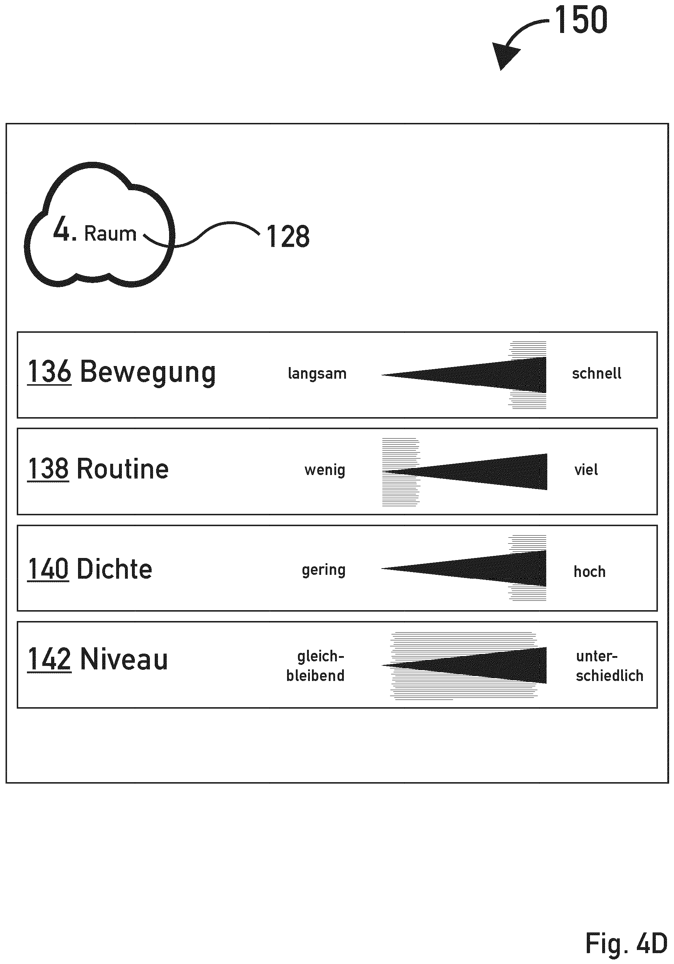

VIERTER RAUMTYP 128: Der vierte Raumtyp 128 wird gemäß Berechnungsschema 150 in Fig. 4D für einen Raumpunkt und/oder für einen Raumbereich ermittelt, wenn die ermittelte BEWEGUNG hohe, die ROUTINE niedrige und die ermittelte DICHTE hohe Werte aufweisen. Die damit ermittelten Raumbereiche sind AUSSEN und OFFEN ausgebildet. Bei Raumbereichen gemäß dem vierten Raumtyp befinden sich Menschen demnach in einem Außenraum mit freiem Zugang. Zum Beispiel: Straße, Bürgersteig, Weg, Platz, Parkanlage, Parkplatz etc.

In den in Fig. 4A bis Fig. 4D dargestellten Klassifizierungsprozessen sind die relevanten Wertebereiche für die einzelnen Aktivitätsattribute bzw. für deren Parameter mit waagerechter Schraffur schematisch angedeutet. Eine seitliche Ausfransung deutet an, dass der konkret zu wählende Schwellwert für das relevante Werteintervall sich an den insgesamt

EP 4 626 044 A1

zu analysierenden Aktivitätsdaten bzw. Eingabedaten orientieren kann und in geeigneter Weise angepasst werden kann.

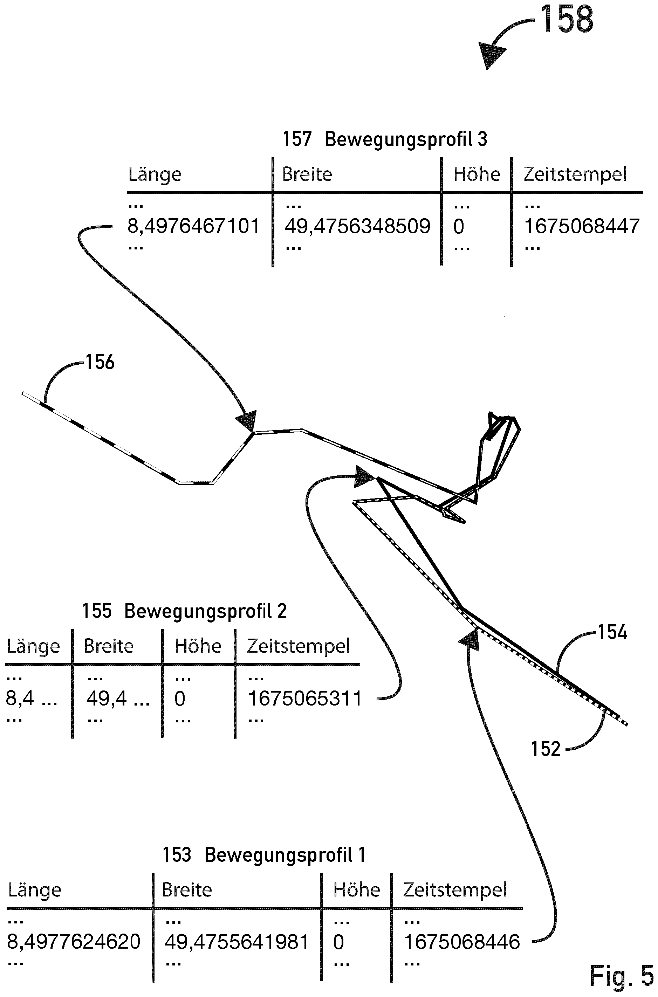

Fig. 5 zeigt in einer schematischen Ansicht eine beispielhafte Veranschaulichung von drei aufgezeichneten Aufenthalts- und/oder Bewegungsprofilen von Personen bzw. von deren mobilen Endgeräten an Raumpunkten eines gebauten Raums. Eine erste Spur 152 repräsentiert das Bewegungsprofil 1 eines ersten mobilen Endgeräts. Der Standort-Datensatz 153 des Bewegungsprofils 1 entspricht einem Raumpunkt des gebauten Raums, der sich auf der Spur 152 befindet. Eine zweite Spur 154 repräsentiert das Bewegungsprofil 2 eines zweiten mobilen Endgeräts. Der Standort-Datensatz 155 des Bewegungsprofils 2 entspricht einem Raumpunkt des gebauten Raums, der sich auf der Spur 154 befindet. Eine dritte Spur 156 repräsentiert das Bewegungsprofil 3 eines dritten mobilen Endgeräts. Der Standort-Datensatz 157 des Bewegungsprofils 3 entspricht einem Raumpunkt des gebauten Raums, der sich auf der Spur 156 befindet. Die drei Spuren werden auf einer Karte 158 dargestellt.

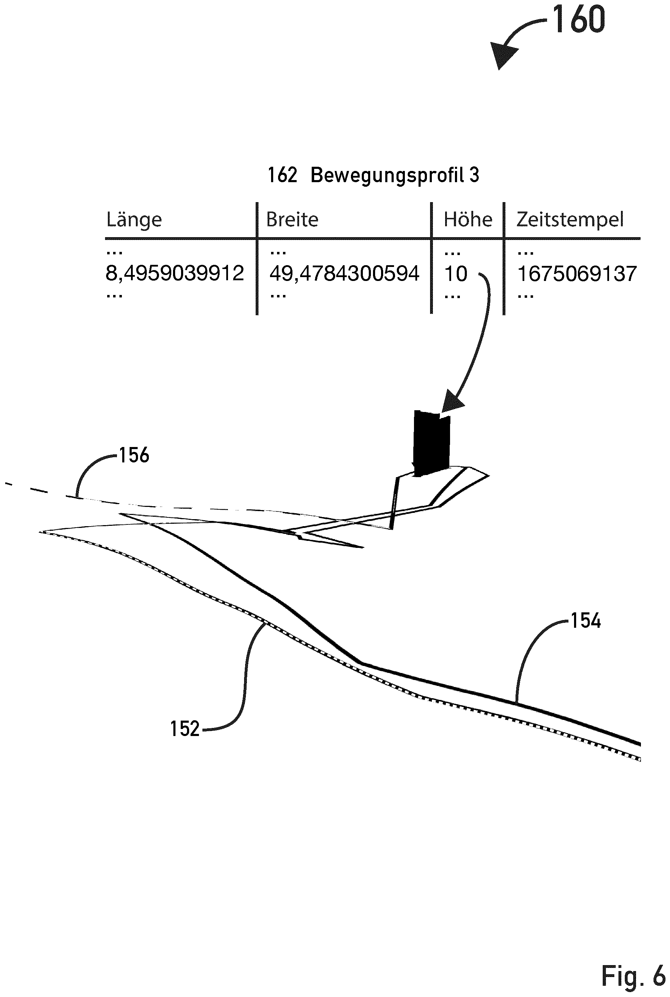

Fig. 6 zeigt in einer schematischen 3D-Ansicht eine beispielhafte Veranschaulichung der drei aufgezeichneten Aufenthalts- und/oder Bewegungsprofilen von Personen bzw. von deren mobilen Endgeräten an Raumpunkten eines gebauten Raums gemäß Fig. 5. Die drei Spuren 152, 154 und 156 in Fig. 6 entsprechen den Spuren 152, 154 und 156 aus Fig. 5. Aufgrund der 3D-Perspektive der Karte 160 lässt sich eine unterschiedliche Höhenlage der Spuren schematisch darstellen. Der Raumpunkt auf der dritten Spur 156 zu dem Standort-Datensatz 162 des Bewegungsprofils 3 ist gegenüber dem Raumpunkt gemäß Standort-Datensatz 157 höher gelegen.

Tabelle 1 zeigt eine Auflistung von einem aufgezeichneten Aufenthalts- und/oder Bewegungsprofil eines mobilen Endgeräts eines Benutzers über einen vorgegebenen Zeitraum hinweg. Im Konkreten zeigt Tabelle 1 insgesamt 19 Standort-Datensätze, die 19 Raumpunkten auf der ersten Spur 152 entsprechen, die in Fig. 5 und Fig. 6 dargestellt ist. Ein Standort-Datensatz umfasst im Rahmen dieses Ausführungsbeispiels eine Standort-Koordinate bzw. einen Raumpunkt mit Länge (zum Beispiel als Dezimalgrad), Breite (zum Beispiel als Dezimalgrad) und Höhe (zum Beispiel in Meter m gemessen) sowie der zu dem Raumpunkt gehörende Zeitstempel, nämlich die ersten vier Spalten in einer Zeile der Tabelle 1. Der erste Standort-Datensatz in Tabelle 1 entspricht dem Standort-Datensatz 153 gemäß Fig. 5. Bei dem Zeitstempel kann es sich zum Beispiel um den Unix-Zeitstempel handeln, der die Zeit als laufende Gesamtzahl von Sekunden verfolgt. Diese Zählung beginnt bei der Unix-Epoche am 1. Januar 1970 um UTC. Somit ist der Unix-Zeitstempel lediglich die Anzahl der Sekunden zwischen einem bestimmten Datum und der Unix-Epoche.

In Tabelle 1 entspricht der 30.01.2023 um 09:47:26 Uhr dem Zeitstempel 1675068446. Der Zeitstempel 1675074656 (vgl. letzte Zeile bzw. letzter Standort-Datensatz in Tabelle 1) entspricht dem 30.01.2023 um 11:30:56 Uhr. Die Standort-Datensätze gemäß Tabelle 1 sind in zeitlicher Abfolge geordnet, so dass sich für einen Standort-Datensatz unter Berücksichtigung seines nachfolgenden Standort-Datensatzes Aktivitätsattribute herleiten bzw. berechnen lassen. Zum Beispiel lässt sich aus Länge und Breite eines Standort-Datensatz im Vergleich zu Länge und Breite des nachfolgenden Standort-Datensatzes die Entfernung bzw. der Abstand zwischen zwei lokalisierten Raumpunkten ermitteln, den das mobile Endgeräte zurückgelegt hat.

Aus den dazugehörigen Zeitstempeln ergibt sich der Zeitraum (vgl. sechste Spalte in Tabelle 1), der zum Beispiel in der Einheit Stunde h angegeben werden kann, in dem die Entfernung bzw. der Abstand (vgl. fünfte Spalte in Tabelle 1) zurückgelegt worden ist und somit auch die Geschwindigkeit (vgl. siebte Spalte in Tabelle 1) des mobilen Endgeräts zwischen zwei aufeinanderfolgenden lokalisierten Raumpunkten.

Die berechneten Werte für Entfernung und Geschwindigkeit für einen Standort-Datensatz bzw. einem entsprechend lokalisierten Raumpunkt stehen also in Bezug zwischen dem lokalisierten Raumpunkt und seinem nachfolgenden lokalisierten Raumpunkt. Die in Tabelle 1 in einer Zeile zu einem Standort-Datensatz angegebene Geschwindigkeit kann beispielsweise als Bewegungsinformation bzw. als Bewegungsparameter für einen lokalisierten Raumpunkt herangezogen werden.

Des Weiteren können beispielsweise der ermittelte Abstand und der ermittelte Zeitraum zwischen zwei aufeinanderfolgenden Standort-Datensätzen bzw. lokalisierten Raumpunkten zur Berechnung der Routineinformation bzw. des Routineparameters herangezogen werden.

Der Höhenwert in der dritten Spalte von Tabelle 1 kann beispielsweise zur Ermittlung der Niveauinformation bzw. des Niveauparameters herangezogen werden, indem eine Änderung des Höhenwerts in Bezug auf den nachfolgenden Standort-Datensatz bzw. den nachfolgenden lokalisierten Raumpunkt berücksichtigt wird.

**Tabelle 1**

| # | Länge (Dezimalgrad) | Breite (Dezimalgrad) | Höhe (m) | Zeitstempel (s) | Abstand (m) | Zeitraum (h) | Geschwindigkeit (km/h) |
|---|---|---|---|---|---|---|---|
| 1 | 8,4977624620 | 49,4755641981 | 0 | 1675068446 | 157,11 | 0,008333 | 18,8537 |
| 2 | 8,4955698213 | 49,4764793520 | 0 | 1675068476 | 128,5 | 0,008333 | 15,4201 |
| 3 | 8,4937822339 | 49,4776550442 | 0 | 1675068506 | 66,24 | 0,008333 | 7,9489 |
| 4 | 8,4947086470 | 49,4777009358 | 0 | 1675068536 | 26,77 | 0,066667 | 0,4015 |

(fortgesetzt)

| # | Länge (Dezimalgrad) | Breite (Dezimalgrad) | Höhe (m) | Zeitstempel (s) | Abstand (m) | Zeitraum (h) | Geschwindigkeit (km/h) |
|---|---|---|---|---|---|---|---|
| 5 | 8,4950825268 | 49,4775822404 | 0 | 1675068776 | 3,54 | 0,016667 | 0,2121 |
| 6 | 8,4950332937 | 49,4776112106 | 0 | 1675068836 | 54,54 | 0,016667 | 3,2721 |
| 7 | 8,4957947118 | 49,4778939143 | 0 | 1675068896 | 21,08 | 0,016667 | 1,2645 |
| 8 | 8,4960771791 | 49,4784268532 | 0 | 1675068956 | 3,08 | 0,016667 | 0,1851 |
| 9 | 8,4960341728 | 49,4784480082 | 0 | 1675069016 | 11,35 | 0,016667 | 0,6811 |
| 10 | 8,4958754536 | 49,4784256129 | 0 | 1675069076 | 1,69 | 0,016667 | 0,1012 |
| 11 | 8,4958990009 | 49,4784356596 | 10 | 1675069136 | 1,01 | 0,016667 | 0,0606 |
| 12 | 8,4959131101 | 49,4784409931 | 10 | 1675069196 | 4,37 | 0,016667 | 0,2621 |
| 13 | 8,4959739911 | 49,4784094616 | 10 | 1675069256 | 14,81 | 0,633333 | 0,0234 |
| 14 | 8,4957679591 | 49,4782752082 | 10 | 1675071536 | 1,51 | 0,183333 | 0,0083 |
| 15 | 8,4957472501 | 49,4782475629 | 10 | 1675072196 | 2,21 | 0,116667 | 0,0189 |
| 16 | 8,4957781124 | 49,4782432056 | 10 | 1675072616 | 0,18 | 0,366667 | 0,0005 |
| 17 | 8,4957805649 | 49,4782452807 | 10 | 1675073936 | 0,33 | 0,183333 | 0,0018 |
| 18 | 8,4957759152 | 49,4782457204 | 10 | 1675074596 | 0,71 | 0,016667 | 0,0429 |
| 19 | 8,4957859022 | 49,4782440223 | 10 | 1675074656 | | | |

Tabelle 2 zeigt eine Auflistung von einem weiteren aufgezeichneten Aufenthalts- und/oder Bewegungsprofil eines weiteren mobilen Endgeräts eines weiteren Benutzers über einen vorgegebenen Zeitraum hinweg. Im Konkreten zeigt Tabelle 2 insgesamt 19 Standort-Datensätze, die 19 Raumpunkten auf der zweiten Spur 154 entsprechen, die in Fig. 5 und Fig. 6 dargestellt ist. Ein Standort-Datensatz umfasst im Rahmen dieses Ausführungsbeispiels eine Standort-Koordinate bzw. einen Raumpunkt mit Länge, Breite und Höhe sowie der zu dem Raumpunkt gehörende Zeitstempel, nämlich die ersten vier Spalten in einer Zeile der Tabelle 2. Der erste Standort-Datensatz in Tabelle 2 ist der Standort-Datensatz 155 gemäß Fig. 5.

In Tabelle 2 entspricht der 30.01.2023 um 08:55:11 Uhr dem Zeitstempel 1675065311. Der Zeitstempel 1675074731 (vgl. letzte Zeile bzw. letzter Standort-Datensatz in Tabelle 2) entspricht dem 30.01.2023 um 11:32:11 Uhr. Die Standort-Datensätze gemäß Tabelle 2 sind in zeitlicher Abfolge geordnet, so dass sich für einen Standort-Datensatz unter Berücksichtigung seines nachfolgenden Standort-Datensatzes Aktivitätsattribute herleiten bzw. berechnen lassen. Zum Beispiel lässt sich aus Länge und Breite eines Standort-Datensatz im Vergleich zu Länge und Breite des nachfolgenden Standort-Datensatzes die Entfernung bzw. der Abstand zwischen zwei lokalisierten Raumpunkten ermitteln, den das mobile Endgeräte zurückgelegt hat.

Aus den dazugehörigen Zeitstempeln ergibt sich der Zeitraum (vgl. sechste Spalte in Tabelle 2) in dem die Entfernung bzw. der Abstand (vgl. fünfte Spalte in Tabelle 2) zurückgelegt worden ist und somit auch die Geschwindigkeit (vgl. siebte Spalte in Tabelle 2) des mobilen Endgeräts zwischen zwei aufeinanderfolgenden lokalisierten Raumpunkten.

Die berechneten Werte für Entfernung und Geschwindigkeit für einen Standort-Datensatz bzw. einem entsprechend lokalisierten Raumpunkt stehen also in Bezug zwischen dem lokalisierten Raumpunkt und seinem nachfolgenden lokalisierten Raumpunkt. Die in Tabelle 2 in einer Zeile zu einem Standort-Datensatz angegebene Geschwindigkeit kann beispielsweise als Bewegungsinformation bzw. als Bewegungsparameter für einen lokalisierten Raumpunkt herangezogen werden.

Des Weiteren können beispielsweise der ermittelte Abstand und der ermittelte Zeitraum zwischen zwei aufeinanderfolgenden Standort-Datensätzen bzw. lokalisierten Raumpunkten zur Berechnung der Routineinformation bzw. des Routineparameters herangezogen werden.

Der Höhenwert in der dritten Spalte von Tabelle 2 kann beispielsweise zur Ermittlung der Niveauinformation bzw. des Niveauparameters herangezogen werden, indem eine Änderung des Höhenwerts in Bezug auf den nachfolgenden Standort-Datensatz bzw. den nachfolgenden lokalisierten Raumpunkt berücksichtigt wird.

**Tabelle 2**

| # | Länge (Dezimalgrad) | Breite (Dezimalgrad) | Höhe (m) | Zeitstempel (s) | Abstand (m) | Zeitraum (h) | Geschwindigkeit (km/h) |
|---|---|---|---|---|---|---|---|
| 1 | 8,4889963887 | 49,4786766782 | 0 | 1675065311 | 162,91 | 0,008333 | 19,5492 |
| 2 | 8,4912708984 | 49,4778282619 | 0 | 1675065341 | 34,32 | 0,008333 | 4,1188 |
| 3 | 8,4917509448 | 49,4778280979 | 0 | 1675065371 | 42,42 | 0,008333 | 5,0906 |
| 4 | 8,4923396100 | 49,4782969405 | 0 | 1675065401 | 50,93 | 0,008333 | 6,1116 |
| 5 | 8,4930519012 | 49,4783255746 | 0 | 1675065431 | 179,71 | 0,016667 | 10,7826 |
| 6 | 8,4955630339 | 49,4776466221 | 0 | 1675065491 | 9,04 | 0,016667 | 0,5423 |
| 7 | 8,4956504489 | 49,4782243733 | 0 | 1675065551 | 9,22 | 0,016667 | 0,5532 |
| 8 | 8,4957780911 | 49,4783405413 | 0 | 1675065611 | 9,88 | 0,016667 | 0,5930 |
| 9 | 8,4959154874 | 49,4784369061 | 10 | 1675065671 | 1,97 | 0,016667 | 0,1180 |
| 10 | 8,4958880269 | 49,4784281309 | 10 | 1675065731 | 8,63 | 0,016667 | 0,5177 |
| 11 | 8,4957676336 | 49,4784800243 | 10 | 1675065791 | 2,54 | 0,950000 | 0,0027 |
| 12 | 8,4958032171 | 49,4784796624 | 10 | 1675069211 | 1,96 | 0,016667 | 0,1173 |
| 13 | 8,4957758860 | 49,4784864124 | 10 | 1675069271 | 0,77 | 0,016667 | 0,0463 |
| 14 | 8,4957652377 | 49,4784750990 | 10 | 1675069331 | 3,05 | 0,016667 | 0,1832 |
| 15 | 8,4957900947 | 49,4782553258 | 10 | 1675069391 | 1,66 | 0,016667 | 0,0993 |
| 16 | 8,4957670947 | 49,4782720208 | 10 | 1675069451 | 0,29 | 0,383333 | 0,0007 |
| 17 | 8,4957634392 | 49,4782618915 | 10 | 1675070831 | 0,95 | 1,066667 | 0,0009 |
| 18 | 8,4957767209 | 49,4782588522 | 10 | 1675074671 | 1,73 | 0,016667 | 0,1037 |
| 19 | 8,4957525925 | 49,4782504615 | 10 | 1675074731 | | | |

Tabelle 3 zeigt eine Auflistung von einem weiteren aufgezeichneten Aufenthalts- und/oder Bewegungsprofil eines weiteren mobilen Endgeräts eines weiteren Benutzers über einen vorgegebenen Zeitraum hinweg. Im Konkreten zeigt Tabelle 3 insgesamt 23 Standort-Datensätze, die 23 Raumpunkten auf der dritten Spur 156 entsprechen, die in Fig. 5 und Fig. 6 dargestellt ist. Ein Standort-Datensatz umfasst im Rahmen dieses Ausführungsbeispiels eine Standort-Koordinate bzw. einen Raumpunkt mit Länge, Breite und Höhe sowie der zu dem Raumpunkt gehörende Zeitstempel, nämlich die ersten vier Spalten in einer Zeile der Tabelle 3. Der erste Standort-Datensatz in Tabelle 3 ist der Standort-Datensatz 157 gemäß Fig. 5.

In Tabelle 3 entspricht der 30.01.2023 um 09:47:27 Uhr dem Zeitstempel 1675068447. Der Zeitstempel 1675074657 entspricht dem 30.01.2023 um 11:30:57 Uhr. Die Standort-Datensätze gemäß Tabelle 3 sind in zeitlicher Abfolge geordnet, so dass sich für einen Standort-Datensatz unter Berücksichtigung seines nachfolgenden Standort-Datensatzes Aktivitätsattribute herleiten bzw. berechnen lassen. Zum Beispiel lässt sich aus Länge und Breite eines Standort-Datensatz im Vergleich zu Länge und Breite des nachfolgenden Standort-Datensatzes die Entfernung bzw. der Abstand zwischen zwei lokalisierten Raumpunkten ermitteln, den das mobile Endgeräte zurückgelegt hat.

Aus den dazugehörigen Zeitstempeln ergibt sich der Zeitraum (vgl. sechste Spalte in Tabelle 3) in dem die Entfernung bzw. der Abstand (vgl. fünfte Spalte in Tabelle 3) zurückgelegt worden ist und somit auch die Geschwindigkeit (vgl. siebte Spalte in Tabelle 3) des mobilen Endgeräts zwischen zwei aufeinanderfolgenden lokalisierten Raumpunkten.

Die berechneten Werte für Entfernung und Geschwindigkeit für einen Standort-Datensatz bzw. einem entsprechend lokalisierten Raumpunkt stehen also in Bezug zwischen dem lokalisierten Raumpunkt und seinem nachfolgenden lokalisierten Raumpunkt. Die in Tabelle 3 in einer Zeile zu einem Standort-Datensatz angegebene Geschwindigkeit kann beispielsweise als Bewegungsinformation bzw. als Bewegungsparameter für einen lokalisierten Raumpunkt herangezogen werden.

Des Weiteren können beispielsweise der ermittelte Abstand und der ermittelte Zeitraum zwischen zwei aufeinanderfolgenden Standort-Datensätzen bzw. lokalisierten Raumpunkten zur Berechnung der Routineinformation bzw. des Routineparameters herangezogen werden.

Der Höhenwert in der dritten Spalte von Tabelle 3 kann beispielsweise zur Ermittlung der Niveauinformation bzw. des Niveauparameters herangezogen werden, indem eine Änderung des Höhenwerts in Bezug auf den nachfolgenden Standort-Datensatz bzw. den nachfolgenden lokalisierten Raumpunkt berücksichtigt wird.

**Tabelle 3**

| # | Länge (Dezimalgrad) | Breite (Dezimalgrad) | Höhe (m) | Zeitstempel (s) | Abstand (m) | Zeitraum (h) | Geschwindigkeit (km/h) |
|---|---|---|---|---|---|---|---|
| 1 | 8,4976467101 | 49,4756348509 | 0 | 1675068447 | 163,65 | 0,008333 | 19,6374 |
| 2 | 8,4953636630 | 49,4766560433 | 0 | 1675068477 | 89,16 | 0,008333 | 10,6989 |
| 3 | 8,4941318022 | 49,4778802992 | 0 | 1675068507 | 69,28 | 0,016667 | 4,1565 |
| 4 | 8,4950993554 | 49,4775583911 | 0 | 1675068567 | 0,73 | 0,016667 | 0,0436 |
| 5 | 8,4951082619 | 49,4775274256 | 0 | 1675068627 | 21,93 | 0,016667 | 1,3159 |
| 6 | 8,4954148068 | 49,4774587771 | 0 | 1675068687 | 20,21 | 0,016667 | 1,2124 |
| 7 | 8,4951329436 | 49,4775896625 | 0 | 1675068747 | 50,81 | 0,016667 | 3,0484 |
| 8 | 8,4958419911 | 49,4778839648 | 0 | 1675068807 | 25,51 | 0,016667 | 1,5304 |
| 9 | 8,4961916746 | 49,4783304354 | 0 | 1675068867 | 6,13 | 0,016667 | 0,3676 |
| 10 | 8,4961077390 | 49,4784393448 | 0 | 1675068927 | 4,76 | 0,008333 | 0,5716 |
| 11 | 8,4960411179 | 49,4784432004 | 0 | 1675068957 | 8,92 | 0,016667 | 0,5352 |
| 12 | 8,4959163700 | 49,4784387612 | 0 | 1675069017 | 3,12 | 0,016667 | 0,1874 |
| 13 | 8,4958727494 | 49,4784243168 | 0 | 1675069077 | 2,23 | 0,016667 | 0,1341 |
| 14 | 8,4959039912 | 49,4784300594 | 10 | 1675069137 | 4,49 | 0,016667 | 0,2695 |
| 15 | 8,4959667371 | 49,4784119024 | 10 | 1675069197 | 10,49 | 0,283333 | 0,0370 |
| 16 | 8,4958214565 | 49,4782837052 | 10 | 1675070217 | 4,31 | 0,150000 | 0,0287 |
| 17 | 8,4957612645 | 49,4782670769 | 10 | 1675070757 | 0,25 | 0,050000 | 0,0050 |
| 18 | 8,4957643662 | 49,4782569312 | 10 | 1675070937 | 0,57 | 0,700000 | 0,0008 |
| 19 | 8,4957722677 | 49,4782637687 | 10 | 1675073457 | 1,49 | 0,150000 | 0,0099 |
| 20 | 8,4957514866 | 49,4782571088 | 10 | 1675073997 | 1,99 | 0,050000 | 0,0399 |
| 21 | 8,4957793255 | 49,4782680199 | 10 | 1675074177 | 0,15 | 0,116667 | 0,0013 |
| 22 | 8,4957800271 | 49,4782557922 | 10 | 1675074597 | 1,04 | 0,016667 | 0,0622 |
| 23 | 8,4957655486 | 49,4782499589 | 10 | 1675074657 | | | |

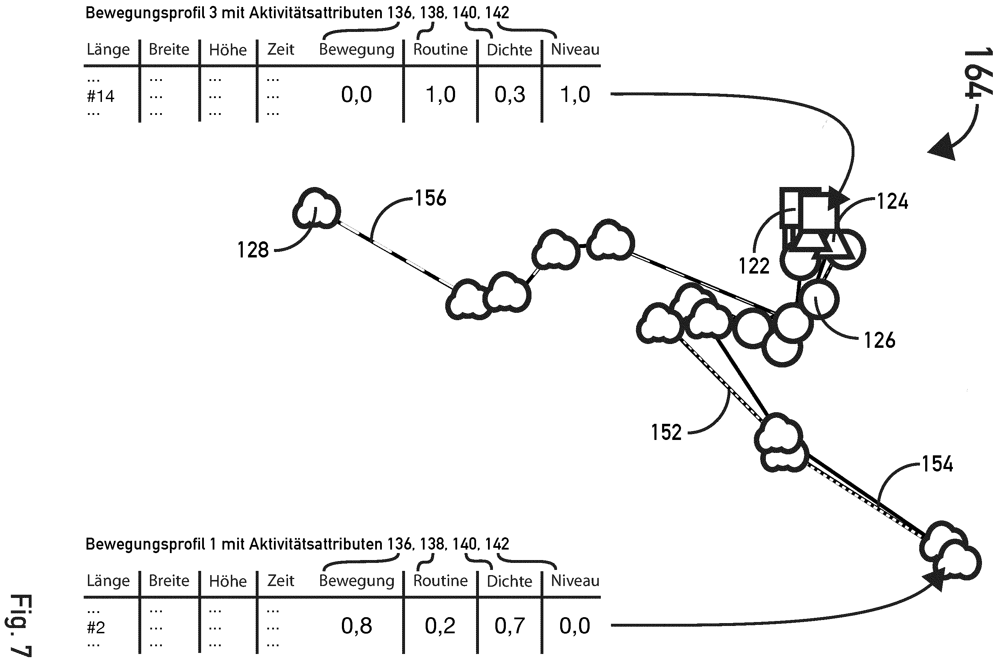

Fig. 7 zeigt in einer schematischen Ansicht eine beispielhafte Veranschaulichung der Bestimmung der Raumtypen basierend auf Aktivitätsattributen zu aufgezeichneten Aufenthalts- und Bewegungsprofilen.

Dazu werden die Datensätze der - zum Beispiel von einer Analyseeinheit - empfangenen Aktivitätsdaten um Aktivitätsattribute ergänzt. In vorteilhafter Weise werden die Aktivitätsattribute zu den Raumpunkten, also für die Standort-Datensätze, berechnet. Die Raumpunkte der Aktivitätsdaten entsprechen den aufgezeichneten Aufenthalts- und Bewegungsprofilen von Personen bzw. von deren mobilen Endgeräten an Raumpunkten eines gebauten Raums. Zu diesen Raumpunkten, wie beispielsweise in den Tabellen 1, 2 und 3 für die Bewegungsprofile 1, 2 und 3 angeben, können nun die Aktivitätsattribute BEWEGUNG, ROUTINE, DICHTE und NIVEAU berechnet werden. Die Aktivitätsattribute BEWEGUNG, ROUTINE, DICHTE und NIVEAU werden vorzugsweise in normalisierter Form berechnet, d.h. der Parameterwert des entsprechenden Aktivitätsattributs ist ein Wert zwischen 0 und 1.

Ein beispielhaftes Berechnungsschema für die Berechnung der Aktivitätsattribute Bewegung, Routine, Dichte und Niveau kann dabei wie folgt vorgesehen sein:

Zur Berechnung der Bewegungsinformation BEWEGUNG als Aktivitätsattribut für einen Standort-Datensatz eines aufgezeichneten Aufenthalts- und/oder Bewegungsprofil eines mobilen Endgeräts kann gelten

$$BEWEGUNG = \frac{Geschwindigkeit - min(Geschwindigkeit)}{max(Geschwindigkeit) - min(Geschwindigkeit)}$$

wobei

- als *Geschwindigkeit* die Geschwindigkeit des Standort-Datensatzes (also am entsprechenden Raumpunkt) berücksichtigt wird,
- als *min(Geschwindigkeit)* die minimale Geschwindigkeit unter allen Standort-Datensätzen des aufgezeichneten Aufenthalts- und/oder Bewegungsprofils berücksichtigt wird, und
- als *max(Geschwindigkeit)* die maximale Geschwindigkeit unter allen Standort-Datensätzen des aufgezeichneten Aufenthalts- und/oder Bewegungsprofils berücksichtigt wird.

Zur Berechnung der Bewegungsinformation ROUTINE als Aktivitätsattribut für einen Standort-Datensatz eines aufgezeichneten Aufenthalts- und/oder Bewegungsprofil eines mobilen Endgeräts kann gelten

$$ROUTINE = \frac{Zeit - min(Zeit)}{max(Zeit) - min(Zeit)}$$

wobei

- als *Zeit* die Verweilzeit des Standort-Datensatzes (also des mobilen Endgerätes am entsprechenden Raumpunkt bzw. in einem vorgegebenen Umgebungsbereich des Raumpunktes) berücksichtigt wird,
- als *min(Zeit)* die minimale Verweilzeit unter allen Standort-Datensätzen des aufgezeichneten Aufenthalts- und/oder Bewegungsprofils berücksichtigt wird, und
- als *max(Zeit)* die maximale Verweilzeit unter allen Standort-Datensätzen des aufgezeichneten Aufenthalts- und/oder Bewegungsprofils berücksichtigt wird.

Zur Berechnung der Bewegungsinformation DICHTE als Aktivitätsattribut für einen Standort-Datensatz eines aufgezeichneten Aufenthalts- und/oder Bewegungsprofil eines mobilen Endgeräts kann gelten

$$DICHTE = \frac{Anzahl - min(Anzahl)}{max(Anzahl) - min(Anzahl)}$$

wobei

- als *Anzahl* die Anzahl von weiteren mobilen Endgeräten in einem vorgegebenen Umgebungsbereich des Standort-Datensatzes (also des mobilen Endgerätes am entsprechenden Raumpunkt) berücksichtigt wird,
- als *min(Anzahl)* die minimale Anzahl von weiterein mobilen Endgeräten in einem vorgegebenen Umgebungsbereich unter allen Standort-Datensätzen des aufgezeichneten Aufenthalts- und/oder Bewegungsprofils berücksichtigt wird, und
- als *max(Anzahl)* die maximale Anzahl von weiteren mobilen Endgeräten in einem vorgegebenen Umgebungsbereich unter allen Standort-Datensätzen des aufgezeichneten Aufenthalts- und/oder Bewegungsprofils berücksichtigt wird.

Zur Berechnung der Bewegungsinformation NIVEAU als Aktivitätsattribut für einen Standort-Datensatz eines aufgezeichneten Aufenthalts- und/oder Bewegungsprofil eines mobilen Endgeräts kann gelten

$$NIVEAU = \frac{Höhe - min(Höhe)}{max(Höhe) - min(Höhe)}$$

wobei

- als *Höhe* die Höhe des Standort-Datensatzes (also des mobilen Endgeräts am entsprechenden Raumpunkt) berücksichtigt wird,
- als *min(Höhe)* die minimale Höhe unter allen Standort-Datensätzen des aufgezeichneten Aufenthalts- und/oder Bewegungsprofils berücksichtigt wird, und
- als *max(Höhe)* die maximale Geschwindigkeit unter allen Standort-Datensätzen des aufgezeichneten Aufenthalts- und/oder Bewegungsprofils berücksichtigt wird.

Somit können die Aktivitätsdaten um berechnete Aktivitätsattribute ergänzt werden, d.h. die Aktivitätsdaten werden mit Bewegungs-, Routine-, Dichte- und Niveauinformationen angereichert.

Für das Bewegungsprofil 1 gemäß Tabelle 1 ergeben sich damit angereicherte Aktivitätsdaten für die einzelnen Raumpunkte, die mit Aktivitätsattributen BEWEGUNG, ROUTINE, DICHTE und NIVEAU gemäß folgender Tabelle 4 ergänzt werden:

**Tabelle 4**

| # | dx | dy | Bewegung | Routine | Dichte | Niveau |
|---|---|---|---|---|---|---|
| 1 | 0,1567738146 | -0,0103412392 | 1,0000 | 0,0000 | 0,6667 | 0,0000 |
| 2 | 0,1278124924 | -0,0132853221 | 0,8179 | 0,1823 | 0,6667 | 0,0000 |
| 3 | -0,0662385367 | -0,0005185749 | 7,9489 | 0,5790 | 0,6667 | 0,0000 |
| 4 | -0,0267324022 | 0,0013412585 | 0,0213 | 0,8306 | 0,6667 | 0,0000 |
| 5 | 0,0035201676 | -0,0003273638 | 0,0112 | 0,9786 | 0,6667 | 0,0000 |
| 6 | -0,0544413986 | -0,0031945519 | 0,1735 | 0,6536 | 0,6667 | 0,0000 |
| 7 | -0,0201964054 | -0,0060222093 | 0,0670 | 0,8668 | 0,6667 | 0,0000 |
| 8 | 0,0030749453 | -0,0002390521 | 0,0098 | 0,9815 | 0,6667 | 0,0000 |
| 9 | 0,0113484262 | 0,0002530675 | 0,0361 | 0,9288 | 0,6667 | 0,0000 |
| 10 | -0,0016836303 | -0,0001135275 | 0,0053 | 0,9904 | 0,6667 | 0,0000 |
| 11 | -0,0010088099 | -0,0000602693 | 0,0032 | 0,9947 | 0,6667 | 0,0000 |
| 12 | -0,0043529933 | 0,0003563067 | 0,0139 | 0,9733 | 1,0000 | 0,0000 |
| 13 | 0,0147312900 | 0,0015170628 | 0,0012 | 0,9068 | 1,0000 | 0,0000 |
| 14 | 0,0014806903 | 0,0003123920 | 0,0004 | 0,9915 | 1,0000 | 1,0000 |
| 15 | -0,0022066559 | 0,0000492377 | 0,0010 | 0,9871 | 1,0000 | 0,0000 |
| 16 | -0,0001753476 | -0,0000234485 | 0,0000 | 1,0000 | 1,0000 | 0,0000 |
| 17 | 0,0003324510 | -0,0000049683 | 0,0001 | 0,9990 | 1,0000 | 0,0000 |
| 18 | -0,0007140713 | 0,0000191879 | 0,0022 | 0,9966 | 1,0000 | 0,0000 |
| 19 | | | | | | |

Für das Bewegungsprofil 2 gemäß Tabelle 2 ergeben sich angereicherte Aktivitätsdaten für die einzelnen Raumpunkte, die mit Aktivitätsattributen BEWEGUNG, ROUTINE, DICHTE und NIVEAU gemäß folgender Tabelle 5 ergänzt werden:

**Tabelle 5**

| # | dx | dy | Bewegung | Routine | Dichte | Niveau |
|---|---|---|---|---|---|---|
| 1 | -0,1626274452 | 0,0095871043 | 1,0000 | 0,0936 | 0,6667 | 0,0000 |
| 2 | -0,0343233135 | 0,0000018528 | 0,2107 | 0,8103 | 0,6667 | 0,0000 |
| 3 | -0,0420895597 | -0,0052979210 | 0,2604 | 0,7652 | 0,6667 | 0,0000 |
| 4 | -0,0509288232 | -0,0003235661 | 0,3126 | 0,7177 | 0,6667 | 0,0000 |
| 5 | -0,1795459922 | 0,0076721640 | 0,5515 | 0,0000 | 0,6667 | 0,0000 |
| 6 | -0,0062501695 | -0,0065285886 | 0,0277 | 0,9512 | 0,6667 | 0,0000 |
| 7 | -0,0091264177 | -0,0013126992 | 0,0283 | 0,9502 | 0,6667 | 0,0000 |
| 8 | -0,0098238320 | -0,0010889218 | 0,0303 | 0,9465 | 0,6667 | 0,0000 |
| 9 | 0,0019634231 | 0,0000991591 | 0,0060 | 0,9906 | 0,6667 | 0,0000 |
| 10 | 0,0086081237 | -0,0005863951 | 0,0264 | 0,9535 | 0,6667 | 0,0000 |

(fortgesetzt)

| # | dx | dy | Bewegung | Routine | Dichte | Niveau |
|---|---|---|---|---|---|---|
| 11 | -0,0025442232 | 0,0000040894 | 0,0001 | 0,9874 | 0,6667 | 0,0000 |
| 12 | 0,0019541770 | -0,0000762749 | 0,0060 | 0,9907 | 1,0000 | 0,0000 |
| 13 | 0,0007613478 | 0,0001278419 | 0,0023 | 0,9973 | 1,0000 | 0,0000 |
| 14 | -0,0017772760 | 0,0024834366 | 0,0093 | 0,9846 | 1,0000 | 1,0000 |
| 15 | 0,0016445015 | -0,0001886530 | 0,0050 | 0,9924 | 1,0000 | 0,0000 |
| 16 | 0,0002613713 | 0,0001144608 | 0,0000 | 1,0000 | 1,0000 | 0,0000 |
| 17 | -0,0009496453 | 0,0000343443 | 0,0000 | 0,9963 | 1,0000 | 0,0000 |
| 18 | 0,0017251827 | 0,0000948152 | 0,0053 | 0,9920 | 1,0000 | 0,0000 |
| 19 | | | | | | |

Für das Bewegungsprofil 3 gemäß Tabelle 3 ergeben sich angereicherte Aktivitätsdaten für die einzelnen Raumpunkte, die mit Aktivitätsattributen BEWEGUNG, ROUTINE, DICHTE und NIVEAU gemäß folgender Tabelle 6 ergänzt werden:

**Tabelle 6**

| # | dx | dy | Bewegung | Routine | Dichte | Niveau |
|---|---|---|---|---|---|---|
| 1 | 0,1632378656 | -0,0115394742 | 1,0000 | 0,0000 | 0,3333 | 0,0000 |
| 2 | 0,0880780480 | -0,0138340914 | 0,5448 | 0,4556 | 0,3333 | 0,0000 |
| 3 | -0,0691800525 | 0,0036375618 | 0,2116 | 0,5772 | 0,3333 | 0,0000 |
| 4 | -0,0006368148 | 0,0003499102 | 0,0022 | 0,9965 | 0,3333 | 0,0000 |
| 5 | -0,0219179578 | 0,0007757278 | 0,0670 | 0,8668 | 0,3333 | 0,0000 |
| 6 | 0,0201532207 | -0,0014790050 | 0,0617 | 0,8773 | 0,3333 | 0,0000 |
| 7 | -0,0506969006 | -0,0033256153 | 0,1552 | 0,6902 | 0,3333 | 0,0000 |
| 8 | -0,0250023715 | -0,0050451178 | 0,0779 | 0,8449 | 0,3333 | 0,0000 |
| 9 | 0,0060013973 | -0,0012306765 | 0,0187 | 0,9634 | 0,3333 | 0,0000 |
| 10 | 0,0047634093 | -0,0000435690 | 0,0291 | 0,9718 | 0,3333 | 0,0000 |
| 11 | 0,0089194723 | 0,0000501635 | 0,0272 | 0,9463 | 0,3333 | 0,0000 |
| 12 | 0,0031188775 | 0,0001632221 | 0,0095 | 0,9818 | 0,3333 | 0,0000 |
| 13 | -0,0022337915 | -0,0000648915 | 0,0068 | 0,9872 | 0,3333 | 0,0000 |
| 14 | -0,0044863341 | 0,0002051739 | 0,0137 | 0,9734 | 0,3333 | 1,0000 |
| 15 | 0,0103875633 | 0,0014486282 | 0,0018 | 0,9368 | 0,3333 | 0,0000 |
| 16 | 0,0043037329 | 0,0001878994 | 0,0014 | 0,9746 | 1,0000 | 0,0000 |
| 17 | -0,0002217773 | 0,0001146469 | 0,0002 | 0,9994 | 1,0000 | 0,0000 |
| 18 | -0,0005649567 | -0,0000772638 | 0,0000 | 0,9974 | 1,0000 | 0,0000 |
| 19 | 0,0014858490 | 0,0000752571 | 0,0005 | 0,9918 | 1,0000 | 0,0000 |
| 20 | -0,0019904767 | -0,0001232955 | 0,0020 | 0,9887 | 1,0000 | 0,0000 |
| 21 | -0,0000501686 | 0,0001381728 | 0,0000 | 1,0000 | 1,0000 | 0,0000 |
| 22 | 0,0010352164 | 0,0000659159 | 0,0031 | 0,9946 | 1,0000 | 0,0000 |
| 23 | | | | | | |

In Fig. 7 ist die beispielhafte Veranschaulichung der drei aufgezeichneten Aufenthalts- und/oder Bewegungsprofile von Personen bzw. von deren mobilen Endgeräten an Raumpunkten eines gebauten Raums gemäß Fig. 5 und Fig. 6 dargestellt. Die drei Spuren 152, 154, 156 in Fig. 7 werden auf einer Karte 164 dargestellt und entsprechen den Spuren 152, 154, 156 aus Fig. 5 bzw. den Spuren 152, 154, 156 aus Fig. 6.

Des Weiteren ist in Fig. 7 der Standort-Datensatz #14 des Bewegungsprofils 3 aus Tabelle 3 beispielhaft dargestellt, wobei der Standort-Datensatz #14 mit den berechneten Aktivitätsattributen Bewegung 136, Routine 138, Dichte 140 und Niveau 142 angereichert ist. Gegenüber den berechneten Werten aus Tabelle 6 für den Standort-Datensatz #14 des Bewegungsprofils 3 sind die in Fig. 7 angegeben Werte - aus Darstellungsgründen - auf die erste Nachkommastelle gerundet.

Der Standort-Datensatz #14 bzw. der entsprechende Raumpunkt des gebauten Raums auf der dritten Spur 156 weist einen niedrigen Wert (0,0) für die Bewegungsinformation, einen hohen Wert 1,0 für die Routineinformation und eine niedrigen Wert 0,3 für die Dichteinformation auf.

Zur automatischen Bestimmung ob die berechneten Parameterwerte für die Aktivitätsattribute hoch oder niedrig sind, können geeignete Schwellwerte und/oder Wertebereiche vorgegeben sein bzw. vorgegeben werden, die sich ferner an den zu analysierenden Aktivitätsdaten bzw. Eingabedaten orientieren können.

Damit ergibt sich als Raumtyp für den zu dem Standort-Datensatz #14 gehörenden Raumpunkt/Raumbereich der erste Raumtyp 122, der INNEN und UMSCHLOSSEN ausgebildet ist.

Des Weiteren ist in Fig. 7 der Standort-Datensatz #2 des Bewegungsprofils 1 aus Tabelle 1 beispielhaft dargestellt, wobei der Standort-Datensatz #2 mit den berechneten Aktivitätsattributen Bewegung 136, Routine 138, Dichte 140 und Niveau 142 angereichert ist. Gegenüber den berechneten Werten aus Tabelle 4 für den Standort-Datensatz #2 des Bewegungsprofils 1 sind die in Fig. 7 angegeben Werte - aus Darstellungsgründen - auf die erste Nachkommastelle gerundet.

Der Standort-Datensatz #2 bzw. der entsprechende Raumpunkt des gebauten Raums auf der ersten Spur 152 weist einen hohen Wert (0,8) für die Bewegungsinformation, einen niedrigen Wert 0,2 für die Routineinformation und einen hohen Wert 0,7 für die Dichteinformation auf.

Damit ergibt sich als Raumtyp für den zu dem Standort-Datensatz #2 gehörenden Raumpunkt/Raumbereich der vierte Raumtyp 128, der AUSSEN und OFFEN ausgebildet ist.

Schließlich sind in Fig. 7 auch der zweite Raumtyp 124 und der dritte Raumtyp 126 für Raumpunkte auf den Spuren 152, 154 und 156 angedeutet, die sich durch automatische Berechnung anhand der empfangenen Aktivitätsdaten, die mit den Aktivitätsattributen angereichert worden sind, bestimmen lassen.

Es sei darauf hingewiesen, dass die voranstehenden Tabellen 1 bis 6 zur beispielhaften Veranschaulichung von einer vorteilhaften Ausgestaltung des erfindungsgemäßen Verfahrens dienen. Ausführungsbeispiele der Erfindung können zur Verarbeitung von Aktivitätsdaten dienen, die zahlreiche Aufenthalts- und/oder Bewegungsprofilen umfassen, die wiederum zahlreiche Standort-Datensätze umfassen können.

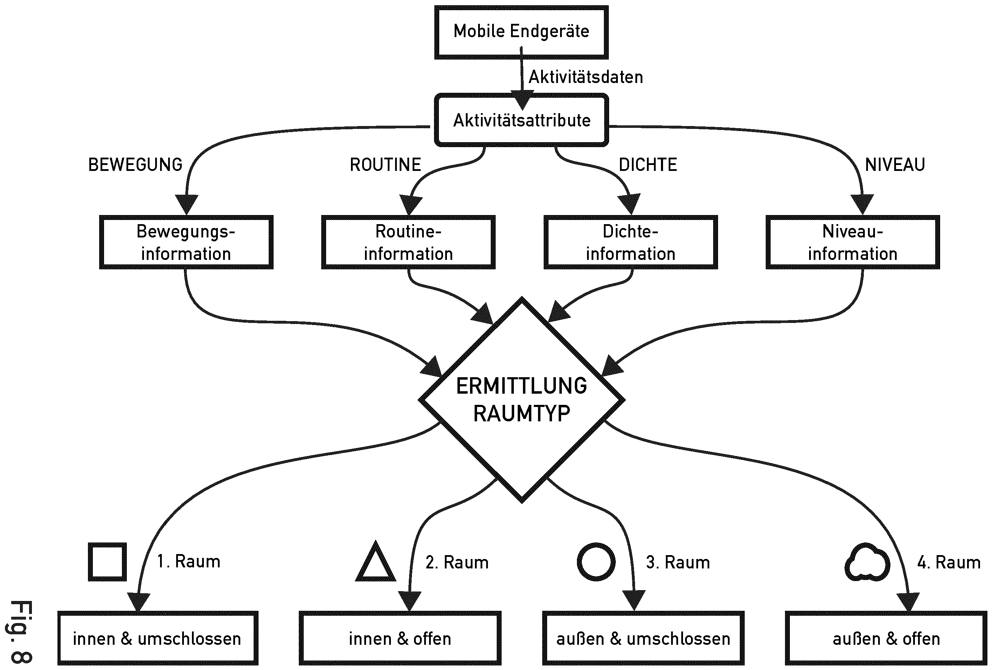

Fig. 8 zeigt eine weitere schematische Ansicht zur beispielhaften Veranschaulichung eines Verfahrens zum Ermitteln von Raumtypender Raumbereiche eines gebauten Raums gemäß eines Ausführungsbeispiels der Erfindung.

Zunächst sind mittels mobiler Endgeräte Bewegungsprofile von Personen erfasst worden, so dass entsprechende Aktivitätsdaten von einer Analyseeinheit empfangen werden können. Die Aktivitätsdaten werden also empfangen, wobei diese Aktivitätsdaten Informationen über die Aufenthalts- und/oder Bewegungsprofile von den mobilen Endgeräten der Personen in dem zu analysierenden gebauten Raum umfassen. Die mobilen Endgeräte der Personen sind an Raumpunkten des gebauten Raums lokalisiert bzw. protokolliert worden.

Auf Basis der Aktivitätsdaten werden dann Aktivitätsattribute für die Raumpunkte der Aktivitätsdaten berechnet. Die Aktivitätsattribute können Bewegungsinformationen, Routineinformationen, Dichteinformationen und Niveauinformationen umfassen.

Basierend auf den Aktivitätsattributen der Raumpunkte kann die physische Beschaffenheit des gebauten Raums in den Raumpunkten und damit auch des die Raumpunkte umgebenden Raumbereichs ermittelt werden, so dass in Abhängigkeit der physischen Beschaffenheit dem Raumbereich ein Raumtyp zugeordnet werden kann bzw. der Raumtyp des Raumbereichs ermittelt werden kann.

Hinsichtlich weiterer vorteilhafter Ausgestaltungen des erfindungsgemäßen Verfahrens wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele des erfindungsgemäßen Verfahrens lediglich zur Erörterung der beanspruchten Lehre dienen, diese jedoch nicht auf die Ausführungsbeispiele einschränken.

Bezugszeichenliste

110     Verfahren gemäß einem Ausführungsbeispiel

110'     Verfahren gemäß einem Ausführungsbeispiel
111      Verfahren gemäß einem weiteren Ausführungsbeispiel
111'     Verfahren gemäß einem Ausführungsbeispiel
112'     Bereitstellen eines Raummodells
114      Empfangen von Aktivitätsdaten
114'     Empfangen von Aktivitätsdaten
116      Ermitteln von Raumtypen
116'     Ermitteln von Raumtypen
118      Visualisierung der Raumtypen
118'     Visualisierung der Raumtypen
120      Raummodell
122      Erster Raumtyp
124      Zweiter Raumtyp
126      Dritter Raumtyp
128      Vierter Raumtyp
130      Aktivitätsdaten
132      Aktivitätsattribute
134      Bewegungsprofil
135      Standort-Datensatz
135'     Standort-Datensatz
135"     Standort-Datensatz
135‴     Standort-Datensatz
136      Bewegungsinformation
138      Routineinformation
140      Dichteinformation
142      Niveauinformation
144      Klassifizierungsprozess
146      Klassifizierungsprozess
148      Klassifizierungsprozess
150      Klassifizierungsprozess
152      Erste Spur
153      Standort-Datensatz
154      Zweite Spur
155      Standort-Datensatz
156      Dritte Spur
157      Standort-Datensatz
158      Karte
160      Karte
162      Standort-Datensatz
164      Karte
K        Kennung eines mobilen Endgerätes

**Patentansprüche**

1. Computerimplementiertes Verfahren zum Ermitteln von Raumtypen von Raumbereichen eines gebauten Raums, umfassend:

   - Empfangen von Aktivitätsdaten, wobei die Aktivitätsdaten Informationen über Aufenthalts- und/oder Bewegungsprofile von mobilen Endgeräten umfassen, wobei die mobilen Endgeräte an Raumpunkten des gebauten Raums lokalisiert und/oder protokolliert worden sind;
   - Ermitteln der Raumtypen für die Raumbereiche des gebauten Raums, vorzugsweise mittels einer Analyseeinheit, wobei auf Basis der Aktivitätsdaten ein oder mehrere Aktivitätsattribute für einen oder mehrere Raumpunkte in einem Raumbereich berechnet werden, wobei basierend auf den Aktivitätsattributen der Raumpunkte eine physische Beschaffenheit des Raumbereichs ermittelt wird, so dass in Abhängigkeit der physischen Beschaffenheit der Raumtyp des Raumbereichs bestimmt wird.

2. Verfahren nach dem vorangehenden Anspruch, wobei die physische Beschaffenheit der Raumbereiche eine erste Beschaffenheitseigenschaft umfasst, wobei die erste Beschaffenheitseigenschaft einen Raumbereich als INNEN oder als AUSSEN charakterisiert.

3. Verfahren nach einem der vorangehenden Ansprüche, wobei die physische Beschaffenheit der Raumbereiche eine zweite Beschaffenheitseigenschaft umfasst, wobei die zweite Beschaffenheitseigenschaft einen Raumbereich als UMSCHLOSSEN oder als OFFEN charakterisiert.

4. Verfahren nach einem der vorangehenden Ansprüche, wobei einer oder mehrere der folgenden Raumtypen vorgesehen sind:

   - ein erster Raumtyp für Raumbereiche, die INNEN und UMSCHLOSSEN ausgebildet sind;
   - ein zweiter Raumtyp für Raumbereiche, die INNEN und OFFEN ausgebildet sind;
   - ein dritter Raumtyp für Raumbereiche, die AUSSEN und UMSCHLOSSEN ausgebildet sind;
   - ein vierter Raumtyp für Raumbereiche, die AUSSEN und OFFEN ausgebildet sind.

5. Verfahren nach einem der vorangehenden Ansprüche, wobei die Aktivitätsdaten eines mobilen Endgeräts Standort-Datensätze umfassen, wobei ein Standort-Datensatz umfasst:

   - einen Zeitstempel;
   - eine Information über den Standort des mobilen Endgeräts zum Zeitpunkt des Zeitstempels.

6. Verfahren nach dem vorangehenden Anspruch, wobei der Standort-Datensatz ferner umfasst:

   - eine Information über die Höhenlage des mobilen Endgeräts zum Zeitpunkt des Zeitstempels.

7. Verfahren nach einem der zwei vorangehenden Ansprüche, wobei die Standort-Datensätze der Aktivitätsdaten des mobilen Endgeräts in zeitlicher Abfolge geordnet sind.

8. Verfahren nach einem der vorangehenden Ansprüche, wobei zur Ermittlung der Aktivitätsattribute für einen Raumpunkt die Aktivitätsdaten eines in dem Raumpunkt lokalisierten und/oder protokollierten mobilen Endgeräts berücksichtigt werden.

9. Verfahren nach einem der vorangehenden Ansprüche, wobei die Raumbereiche des gebauten Raums unter Berücksichtigung von Raumpunkten aufgespannt werden, wobei die Raumpunkte lokalisierten und/oder protokollierten Standorten eines oder mehrerer mobiler Endgeräte entsprechen.

10. Verfahren nach einem der vorangehenden Ansprüche, wobei die Aktivitätsattribute eine Bewegungsinformation für die Raumpunkte umfassen, wobei die Bewegungsinformation eine Information über eine Geschwindigkeit und/oder eine Fortbewegung eines mobilen Endgerätes in einer vorgebbaren Umgebung der Raumpunkte umfasst.

11. Verfahren nach einem der vorangehenden Ansprüche, wobei die Aktivitätsattribute eine Routineinformation für die Raumpunkte umfassen, wobei die Routineinformation eine Information über eine Verweildauer eines mobilen Endgeräts in einer vorgebbaren Umgebung der Raumpunkte umfasst.

12. Verfahren nach einem der vorangehenden Ansprüche, wobei die Aktivitätsattribute eine Dichteinformation für die Raumpunkte umfassen, wobei die Dichteinformation eine Information über eine Anzahl von mobilen Endgeräten in einer vorgebbaren Umgebung der Raumpunkte umfasst.

13. Verfahren nach einem der vorangehenden Ansprüche, wobei die Aktivitätsattribute eine Niveauinformation für die Raumpunkte umfassen, wobei die Niveauinformation eine Information über eine Höhenlage von einem mobilen Endgerät in den Raumpunkten umfasst.

14. Computerprogramm, welches bei Ablauf auf einem Computer oder Computer-Netzwerk das Verfahren nach einem der vorhergehenden Ansprüche ausführt.

15. Speichermedium, in dem computerausführbare Befehle gespeichert sind und die computerausführbaren Befehle, wenn sie in einen Haupt- und/oder Arbeitsspeicher eines Computersystems geladen und von einem Prozessor des Computersystems ausgeführt werden, das Computersystem veranlassen, das Verfahren gemäß einem der vorhergehenden Verfahrensansprüche auszuführen.

110

114

↓

116

Fig. 1A

111

114

↓

116

↓

118

Fig. 1B

110'

112'

114'

116'

Fig. 1C

111'

112'

114'

116'

118'

Fig. 1D

—120

# Raummodell

| 122 | 1. Raum | innen & umschlossen |
| 124 | 2. Raum | innen & offen |
| 126 | 3. Raum | außen & umschlossen |
| 128 | 4. Raum | außen & offen |

Fig. 2

## <u>130</u> Aktivitätsdaten

134 — Bewegungsprofil     K

135 — Länge | Breite | Höhe | Zeitstempel

135' — Länge | Breite | Höhe | Zeitstempel

135'' — Länge | Breite | Höhe | Zeitstempel

135''' — Länge | Breite | Höhe | Zeitstempel

...

## <u>132</u> Aktivitätsattribute

| <u>136</u> Bewegung | langsam ◁ schnell |
| <u>138</u> Routine | wenig ◁ viel |
| <u>140</u> Dichte | gering ◁ hoch |
| <u>142</u> Niveau | gleichbleibend ◁ unterschiedlich |

Fig. 3

144

1. Raum ⁓ 122

136 Bewegung    langsam    schnell

138 Routine    wenig    viel

140 Dichte    gering    hoch

142 Niveau    gleich-bleibend    unter-schiedlich

Fig. 4A

146

2. Raum 124

| 136 Bewegung | langsam | | schnell |
| 138 Routine | wenig | | viel |
| 140 Dichte | gering | | hoch |
| 142 Niveau | gleich-bleibend | | unter-schiedlich |

Fig. 4B

148

○ 3. Raum — 126

| **136** Bewegung | langsam | | schnell |
|---|---|---|---|

| **138** Routine | wenig | | viel |
|---|---|---|---|

| **140** Dichte | gering | | hoch |
|---|---|---|---|

| **142** Niveau | gleich-bleibend | | unter-schiedlich |
|---|---|---|---|

Fig. 4C

150

4. Raum — 128

| 136 Bewegung | langsam | | schnell |
| 138 Routine | wenig | | viel |
| 140 Dichte | gering | | hoch |
| 142 Niveau | gleich-bleibend | | unter-schiedlich |

Fig. 4D

158

### 157 Bewegungsprofil 3

| Länge | Breite | Höhe | Zeitstempel |
|---|---|---|---|
| ... | ... | ... | ... |
| 8,4976467101 | 49,4756348509 | 0 | 1675068447 |
| ... | ... | ... | ... |

156

### 155 Bewegungsprofil 2

| Länge | Breite | Höhe | Zeitstempel |
|---|---|---|---|
| ... | ... | ... | ... |
| 8,4 ... | 49,4 ... | 0 | 1675065311 |
| ... | ... | ... | ... |

154

152

### 153 Bewegungsprofil 1

| Länge | Breite | Höhe | Zeitstempel |
|---|---|---|---|
| ... | ... | ... | ... |
| 8,4977624620 | 49,4755641981 | 0 | 1675068446 |
| ... | ... | ... | ... |

Fig. 5

160

162 Bewegungsprofil 3

| Länge | Breite | Höhe | Zeitstempel |
|-------|--------|------|-------------|
| ... | ... | ... | ... |
| 8,4959039912 | 49,4784300594 | 10 | 1675069137 |
| ... | ... | ... | ... |

156

154

152

Fig. 6

**Bewegungsprofil 3 mit Aktivitätsattributen 136, 138, 140, 142**

| Länge | Breite | Höhe | Zeit | Bewegung | Routine | Dichte | Niveau |
|---|---|---|---|---|---|---|---|
| ... | ... | ... | ... | | | | |
| #14 | ... | ... | ... | 0,0 | 1,0 | 0,3 | 1,0 |
| ... | ... | ... | ... | | | | |

**Bewegungsprofil 1 mit Aktivitätsattributen 136, 138, 140, 142**

| Länge | Breite | Höhe | Zeit | Bewegung | Routine | Dichte | Niveau |
|---|---|---|---|---|---|---|---|
| ... | ... | ... | ... | | | | |
| #2 | ... | ... | ... | 0,8 | 0,2 | 0,7 | 0,0 |
| ... | ... | ... | ... | | | | |

Fig. 7

Fig. 8

Europäisches
Patentamt

European
Patent Office

Office européen
des brevets

# EUROPÄISCHER RECHERCHENBERICHT

Nummer der Anmeldung

EP 25 16 6811

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2018/052346 A1 (ERICSSON TELEFON AB L M [SE]) 22. März 2018 (2018-03-22) * siehe Stellungnahme zur Recherche * ----- | 1-15 | INV. H04W4/029 G06Q10/04 |
| A | US 2018/143024 A1 (KAY JONATHAN MATTHEW [US] ET AL) 24. Mai 2018 (2018-05-24) * Zusammenfassung * * Anspruch 1 * * Absatz [0039] * ----- | 1-15 | |

RECHERCHIERTE SACHGEBIETE (IPC)

H04W
G06Q

Der vorliegende Recherchenbericht wurde für alle Patentansprüche erstellt

| Recherchenort | Abschlußdatum der Recherche | Prüfer |
|---|---|---|
| München | 22. Juli 2025 | Bub, Armin |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
...................................................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 25 16 6811

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-07-2025

| Im Recherchenbericht angeführtes Patentdokument | Datum der Veröffentlichung | Mitglied(er) der Patentfamilie | Datum der Veröffentlichung |
|---|---|---|---|
| WO 2018052346 A1 | 22-03-2018 | KEINE | |
| US 2018143024 A1 | 24-05-2018 | KEINE | |

Für nähere Einzelheiten zu diesem Anhang : siehe Amtsblatt des Europäischen Patentamts, Nr.12/82